# EUROPEAN PATENT SPECIFICATION

(11) **EP 0 578 634 B1**
(45) Date of publication and mention of the grant of the patent: **24.07.1996**
(21) Application number: 91915308.0
(22) Date of filing: 29.08.1991
(51) Int. Cl.: G06F 9/44

(54) **METHOD FOR SPECIFYING USER INTERFACES AND PROGRAMMING SYSTEM RUNNING A MULTIPLE USER INTERFACE TYPE COMPUTER**
VERFAHREN ZUR BESTIMMUNG VON BENUTZERSCHNITTSTELLEN UND PROGRAMMIERSYSTEM FUR EINEN RECHNER MIT MEHREREN BENUTZERSCHNITTSTELLEN
PROCEDE DE SPECIFICATION D'INTERFACES D'UTILISATEUR ET SYSTEME DE PROGRAMMATION POUR EXPLOITER UN ORDINATEUR DE TYPE A INTERFACES D'UTILISATEUR MULTIPLES

(30) Priority: 30.03.1991 EP 91105137
(43) Date of publication of application: 19.01.1994
(73) Proprietor: International Business Machines Corporation, Armonk, N.Y. 10504 (US)
(72) Inventor: DIEHL, Hans, D-7032 Sindelfingen (DE); DOCKWEILER, Hans, Günter, D-7032 Sindelfingen (DE); WELSCH, Martin H., D-71083 Herrenberg (DE)
(74) Representative: Schäfer, Wolfgang, Dipl.-Ing.
(86) International application number: EP9101642
(87) International publication number: WO9217838

(56) References cited:
- ACM TRANSACTIONS ON INFORMATION SYSTEMS vol. 8, no. 3, July 1990, NEW YORK, US pages 204-236; CHARLES WIECHA ET AL: 'ITS: A tool for Rapidly Developing Interactive Applications'
- COMMUNICATIONS OF THE ASSOCIATION FOR COMPUTING MACHINERY. vol. 32, no. 11, November 1989, NEW YORK, US pages 1352-1358; ELIEZER KANOROWITZ AND ODED SUDARSKY: 'The Adaptable User Interface'

## Description

The invention relates to system and a method for integrating a number of different user interface types of a computer system each having one of different input, output or dialog modes, and means for allowing a user initiated switching between different input, output or dialog modes.

From US-A-4 845 665 a simulation of computer program external interfaces is known. This patent describes a method for developing computer program external interfaces, understood as display screens and windows, by simulating the interfaces to allow prospective users or programmers to evaluate the design of the program, even before program code for the simulated program is created. The interfaces are executed as a simulated program. During execution, the interfaces may be altered; execution can then continue using the altered interfaces.

This known method concerns a facility to define and simulate user interfaces that are concerned with visible indications for human. It does not provide support for multiple user interface types in a general way.

With advanced programming systems it will be necessary to support different types of user interfaces. Those different types of user interfaces may for example be:
a panel oriented dialog interface with data entry panels, selection panels, and list panels which can be displayed on non-programmable or programmable terminals; a direct manipulation interface where by use of, for example, a mouse device the user can directly manipulate the graphical representation of objects on the display screen;
a speech input and/or speech output interface;
a combination of the above interactive interfaces;
a command language interface for the experienced user.

Further types of user interfaces, e. g. touch screen interfaces, are known already today, still additional ones may show up in the future.

Often, it is desired to support multiple such user interface types by a programming system, for example, an operating system. For most programming systems it is also useful to be extendable towards the support of future new user interface types.

Today there exist different implementation techniques for the various user interface types. However, the separate implementation of each of those interface types has the following disadvantages:
it results in a high development effort;
it makes it more difficult to ensure consistency among the different types of user interface implementations. With a consistent implementation of the different user interface types the same set of input parameters is requested, with the same default values, and with identical validity checking; it makes it difficult or almost impossible to combine and integrate the multiple user interface types, such that for example dynamic switching from one user interface type to another is possible.

In the past the afore-mentioned problems and disadvantages were not taken that seriously because the number of user interface types being considered was low. Certain advanced user interface types such as the direct manipulation interface and speech I/O are still only rarely used in general purpose programming systems. Furthermore with the few user interface types being considered it was accepted to spent additional effort to solve part of the afore-mentioned problems and disadvantages.

The best example where in existing programming systems multiple, namely two, user interface types are supported concurrently are programming systems which support a command language interface beside a panel oriented dialog interface. Such examples are known from the IBM Operating Systems VSE, MVS, and VM. With a typical implementation of such programming systems the dialog interface is implemented on top of the command interface. This reduces the above mentioned problems and disadvantages, but this solution can only be extended with difficulty to support more than two user interface types. In addition, this method imposes restrictions on the flexibility of the superimposed interactive user interfaces. For example, all input parameters must be completely input by the user, before the underlying command interface may even be called.

An adaptable user interface which allows the user to switch between any number of different dialogue modes at any time is described by E. Kantorowitz et al, "The Adaptable User Interface", Communications of the Association for Computing Machinery, Vol. 32, No. 11, November 1989, New York, USA, pages 1352-1358. Such interface can be used by a variety of users having different experience, and for applications where more than two dialog modes are appropriate. The interface is based on the understanding that various dialogue modes are different representations of a single underlying dialogue language which is assumed to be constructed of a number of elementary syntactic components called tokens. This known interface was developed by means of a graphic user interface design system which generates three main modules called lexical, syntactic and semantic components. The lexical component identifies the tokens in a stream of events, the syntactic component analyzes the tokens identified and invokes the semantic component when required. The semantic component is the collection of application routines written by the application programmer while the syntactic and lexical components constitute the user interface of the application program. The user interface specifications do not cause the generation of any code but are stored in a relational data base and interpreted at run-time. Switching between dialogue modes takes place by using the devices which is wanted. The lexical component manages all the input and output of the application program consisting of text, menus, icons and links between icons. The different dialogue modes are managed by the lexical component which has no knowledge of the mode in which the token was entered. The syntactic component uses a recursive transition network as the definition of the dialogue language. Such recursive transition network is constructed from a number of subnets each of which is represented by a directed graph wherein the nodes represent states and the edges represent transitions. This system does not support different user interface types each of which may be able to perform different operation modes.

It is also known to specify complex interaction dialogues for user interfaces by decomposing them in AND/OR graphs called Event Decomposition Graphs ("EDGE - A Graph Based Tool for Specifying Interactions" by M.F. Kleyn et al, Proceedings of the ACM Symposium on User Interface Software, Banff, Alberta, Canada, October 1988, pages 1-14). In the AND/OR graphs the nodes represent events (actions) where an AND-linked node represents a sets of events that should occur together sequentially. OR-linked nodes indicate choice points at which only one of the events of a set of OR-linked child nodes must occur to complete the event of the parent node. An AND/OR graph as a whole represents the set of possible dialogs that accomplish a certain task such as scrolling a window, drawing a polyline, using a pop menu, etc. The events can include system output events, such as opening a window, or system input events, such as depressing a key. This method allows a progressively refined capturing of the detailed semantics of the dialog but does not provide for integrating different user interface types and different operation modes.

Furthermore, it is known to provide a user interface management system which separate an application from its interface ("ITS: A Tool for Rapidly Developing Interactive Applications" by C. Wiecha et al, ACM Transactions on Information Systems, Vol. 8, No. 3, July 1990, New York, USA, pages 204-236). Such system divides an application into two layers, an application layer implementing the underlying computations and an interface layer implementing the details of interface presentation and interaction. Also this system does not provide for integrating different user interface types and different operation modes.

It is therefore the object of the present invention to provide a system and a method for the realization of a human-computer-interface which permits support of multiple different user interface types concurrently in a consistent manner and which is able to run a computer system comprising multiple user interface types using different operation modes.

This object as well as other objects of the invention are solved basically by applying the features laid down in claims 1 and 7. Further advantageous developments of the invention are laid down in the respective depending claims.

The present invention has the following advantages:
1) It guarantees the consistent support of multiple user interface types since such information which is common for multiple user interface types either exists only once, namely in the general part of the user interface information (GP-UII), or is generated out of the GP-UII by use of development tools which ensure consistency.
2) It enables the implementation of integrated facilities, such as the ability to switch dynamically between different user interface types. Such facilities are only feasible, if
   a) there exists a common control information which remains valid, even if for example the user interface type is switched dynamically. The GP-UII represents this common information;
   b) There exists a central function which is in control of the user interface and is independent of the user interface type presently active. For this purpose the generalized user interface layer (GUIL) is provided.
3) It saves development costs since with both the run-time program structure and the development tools, functions which are common among multiple user interface types, are implemented only once.
4) It makes the programming system easily extendable to new interface types since due to the application structure the functional program and the presentation front-end programs dealing with user interfaces are properly separated.

In the following the invention will be explained in more detail in connection with the shown and described embodiment and the Figures in which
- Fig. 1: shows an example of an AND/OR graph for a user interface for specific device characteristics in accordance with the present invention;
- Fig. 2: the overall structure of the user interface in accordance with the present invention;
- Fig. 3: block diagram showing development tools in accordance with the present invention;
- Fig. 4: shows a panel resulting from the UII (user interface information) shown in Example 1;
- Fig. 5: shows a panel resulting from the UII shown in Example 2;
- Fig. 6: shows a panel resulting from the UII shown in Example 3;
- Fig. 7: shows a panel resulting from the UII shown in Example 4;
- Fig. 8: shows a panel resulting from the UII shown in Example 6;
- Fig. 9: shows a panel resulting from the UII shown in Example 7, and
- Fig. 10: shows a panel resulting from the UII shown in Example 7 if there are less than three choice items.
- Fig. 11: shows another AND/OR graph for a user interface.
- Fig. 12: shows a panel produced using the dialog interface.
- Fig. 13: shows a window produced using the graphic interface.
- Fig. 14: shows a window produced using the copy command in the graphic interface.
- Fig. 15: shows a panel allowing the input of device attributes using the dialog interface.

The method of the present invention is based on the grouping of the information defining the user interface for all different user interface types in a
1) general part which is common for all the different user interface types, the general part - user interface information (GP-UII) and
2) user interface type specific information, the special part - user interface information (SP-UII).

Based on this concept the invention provides a specific implementation of user interfaces. The provided solution addresses three areas
a) the structure and content of the control information which describes the user interfaces;
b) the structure and function of the program providing the user interfaces at run-time, and
c) the development tools to be used for developing the control information for the different user interface types.

The information describing the user interface, henceforth called UII (user interface information), is structured according to an AND/OR graph with child nodes being dependent on father nodes. This type of graph is called a directed graph. The OR-nodes in the graph represent alternatives, one of which has to be selected by the users, AND-nodes express sets of information units, and terminal nodes attached to AND-nodes represent data input or output to be communicated. Each node of the UII has associated with it the GP-UII and multiple SP-UIIs as described above.

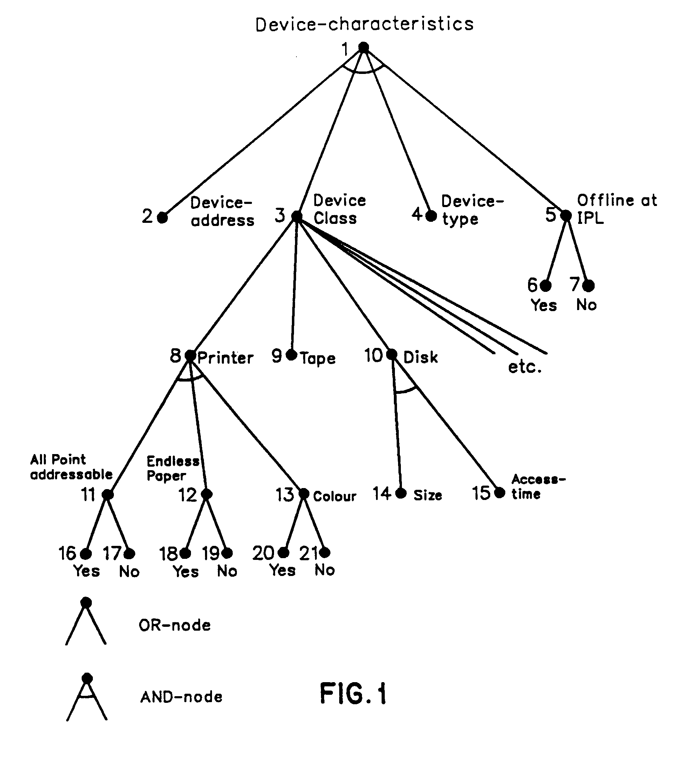

In Fig. 1 an UII example is given in a graphical representation. In this example node 1 is an AND-node (the father node) and branches to nodes (the child nodes) 2 to 5 representing device address, device class, device type and off-line at initial program loading (IPL). Node 5 has two terminal nodes, nodes 6 and 7, representing YES or NO which are selected by the user, thus indicating whether the device is off-line at IPL. In further defining the device class the OR-node 3 branches to AND-node 8 for a printer, 9 for a tape and 10 for a disk. Other possible branches are indicated as etc. The printer has attributes specifying an all-point-addressable option indicated with node 11, an endless paper option as indicated by node 12 and a colour option indicated by node 13. If any of these three cases are selected, this fact is then indicated by a YES or NO selection on the terminal nodes 17 to 21. The AND-node 10 leads in the given example to node 14 indicating the size and to node 15 indicating the access time of the disk.

In a real programming system the graphical representation (of course) has to be mapped to data structures, for example to a list of 'Nodes'. A 'Node' then consists of
o A node-name
   The node name should be unique in the graph, or capable of being made unique by adding a qualifier to it.
o Structural information
   - Node-type (AND,OR,TERMINAL)
   - Child-nodes (deeper level)
   - Next-node (same level)
o General information common for all user interface types. This information together with the structural information constitutes the GP-UII mentioned above.
o Special information for each user interface type being supported. This is the SP-UII mentioned above.

Details on this structure for the example depicted in Fig. 1 are given in Table 1:

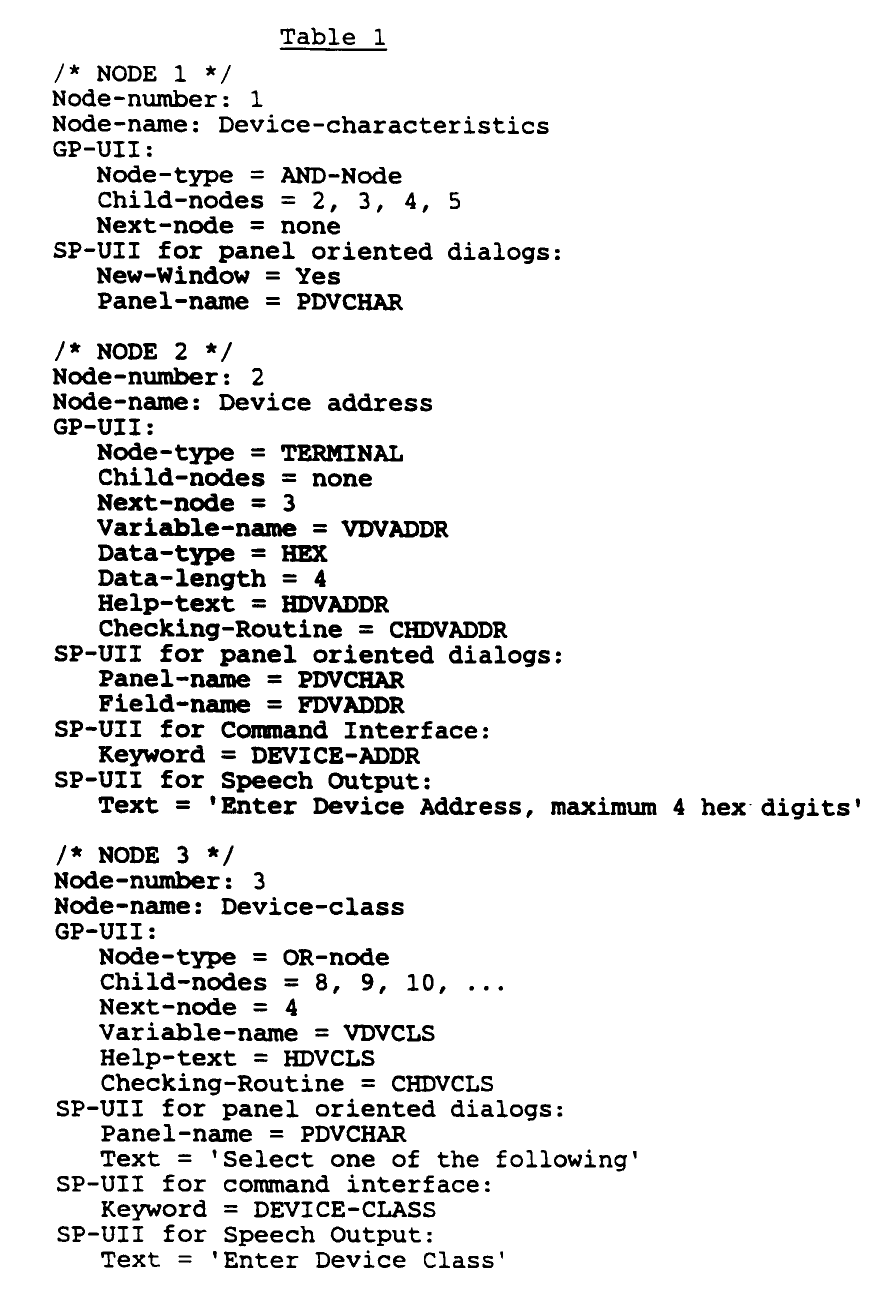

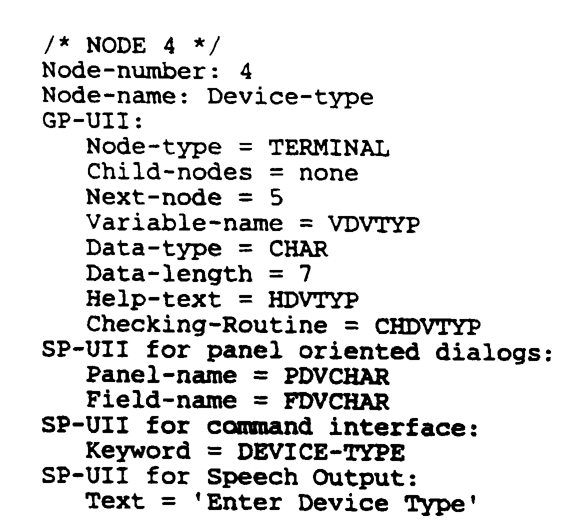

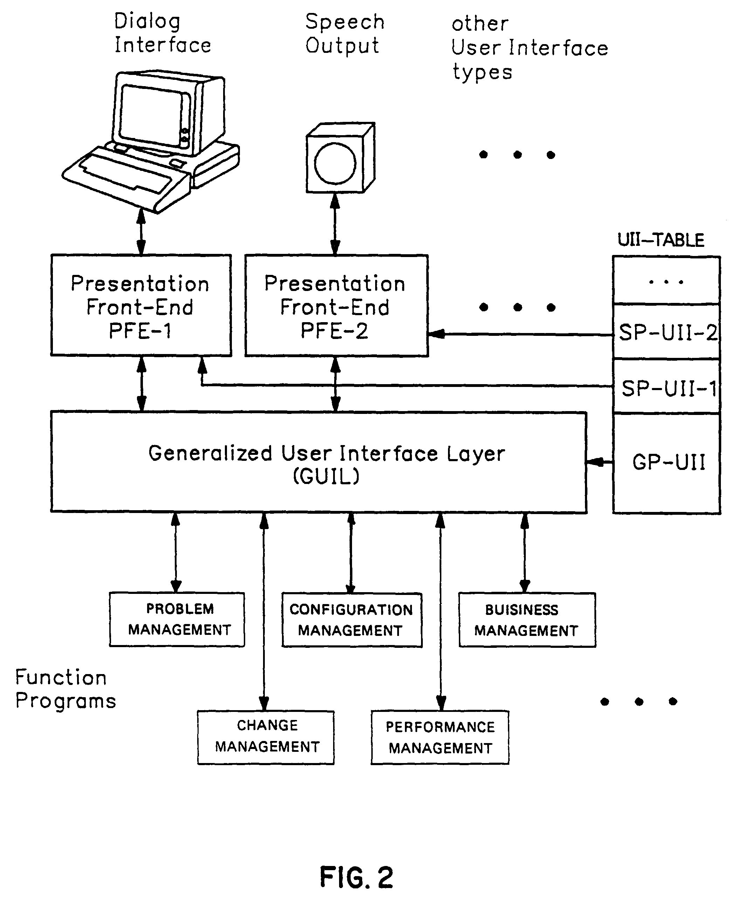

The structure and function of the programs providing the user interfaces at run-time includes a program structure for support of multiple user interface types having a so-called generalized user interface layer (GUIL). As depicted in Fig. 2 this layer resides between the function programs and the presentation front end programs PFE-1, PFE-2, **...,** PFE-n. The function programs implement the function of the programming system in a user interface type independent way. That means with other words that the function programs exchange data with their PFEs through the GUIL in a user interface type independent way. The GUIL is a program which knows which specific user interface type is presently active and invokes the corresponding PFE. In addition, the GUIL keeps track of user interface parameters already obtained, and skips the invocation of the PFE if the desired parameters are already available. In Fig. 2 examples of function programs such as problem management, change management, configuration management, performance management, and business management are shown. The following shows a sample control flow between function program, generalized user interface layer, and presentation front end. In this example, there are two alternative interface types: a dialog interface and a command interface. The function program in this sample is a configuration management function to add a device.

### Function Program

- Fill a value buffer with output (initial/default) values
- Call GUIL, parameters (value buffer, UII-table name)
- Get input values from value buffer and perform 'Add Device' function

Generalized User Interface Layer (GUIL)
- Determine currently active PFE
- Call PFE, parameters (value buffer, UII-table name)
- Return to function program

### Presentation Front End (PFE) for

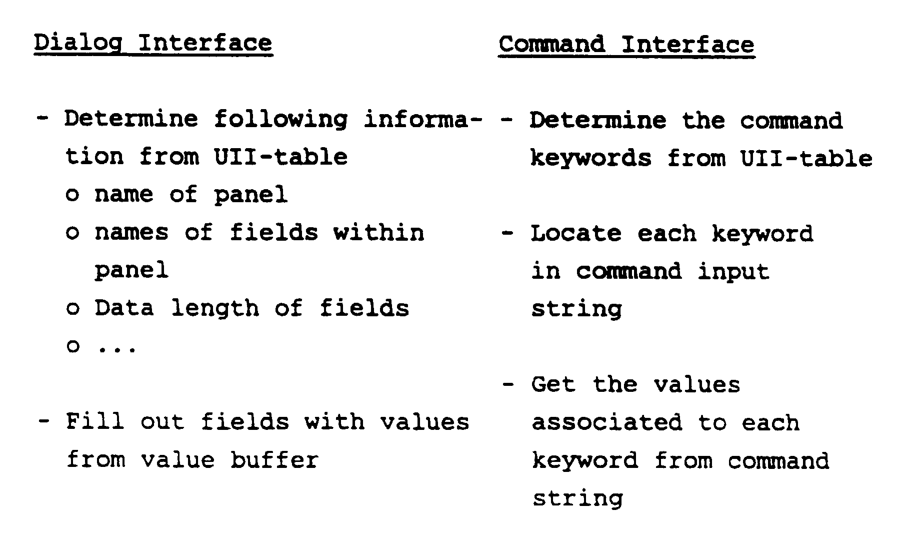

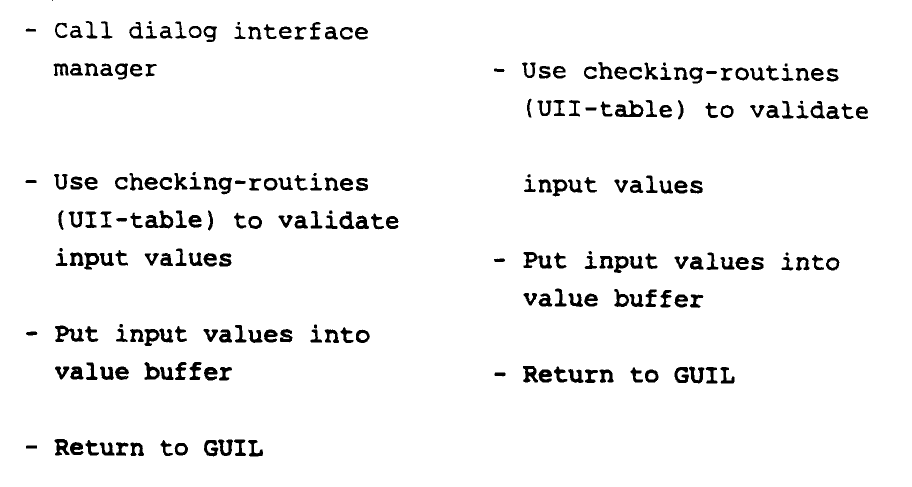

Besides enabling the concurrent support of different user interface types with a given installation, it gives the further advantage to be prepared for future addition of new interface types.

Some typical user interface types which may be supported this way are the following
o Menu oriented display terminal interface, i.e. a dialog interface.
   This type of interface is probably the most used user interface type today. Advanced versions of this interface type utilize APA displays and a mouse device with techniques such as pop-up windows, action bars, radio buttons, check buttons, etc. Later under the heading "The development process for a user interface" it is described how the UII can be mapped to typical panel types of such a type of user interface.
o Direct Manipulation interface
   With this type of user interface the objects related to a certain function are shown at the screen of a display terminal and the user causes actions on these objects by manipulating the objects directly on the display screen. Among all the interface types considered, the direct manipulation interface requires the highest degree of abstraction when being translated into the UII. Nevertheless, it is useful to map the direct manipulation interface to an interface layer reflecting the UII (i. e. to the Generalized User Interface Layer shown in Fig. 2), not only if further interface types are being supported.
o Command Interface
   As a complement to menu oriented interfaces, the command interface is useful for fast access to functions by experienced users. With the UII concept there is no problem with mapping a command language interface to an interface reflecting the UII.
o Speech Input and/or Speech Output
   The constructs supported by the UII can easily be mapped to speech output statements. Special conventions would have to be introduced for the handling of lists. The problem of supporting speech input for more than a limited fixed vocabulary would have to be solved, but is independent of using the UII concept, and not part of the present invention.
o Program Call Interface
   Beside supporting an external user interface, it is often desirable to support access to the same functions through an internal interface which can be accessed from arbitrary programs. Obviously the Generalized User Interface Layer shown in Fig. 2 is ideally suited for support of such a program call interface. Conventions with respect to the syntax of the program call request, the type and format of the return information, checking rules, etc. have to be defined.

As shown in Fig. 2 the 'Generalized User Interface Layer' GUIL is controlled by the UII-table. The UII-table reflects the internal (i.e. program readable) format of the UII. This means, it defines the essential information communicated between the computer and the human, the GP-UII and information on the dialog structure. Access to interface type specific information, the SP-UII, is normally supported by including references to interface type specific control information in the UII-table. It may, however also be useful to include the respective control information for the primary user interface types being supported already in the UII-table as depicted in Fig. 2.

In the UII-table layout shown in Table 2 the information required for the menu oriented display terminal interface and the command interface is included. Direct manipulation interface and speech I/O are not considered in the shown case.

Table 2 shows the machine readable format of a node as described in Table 1.

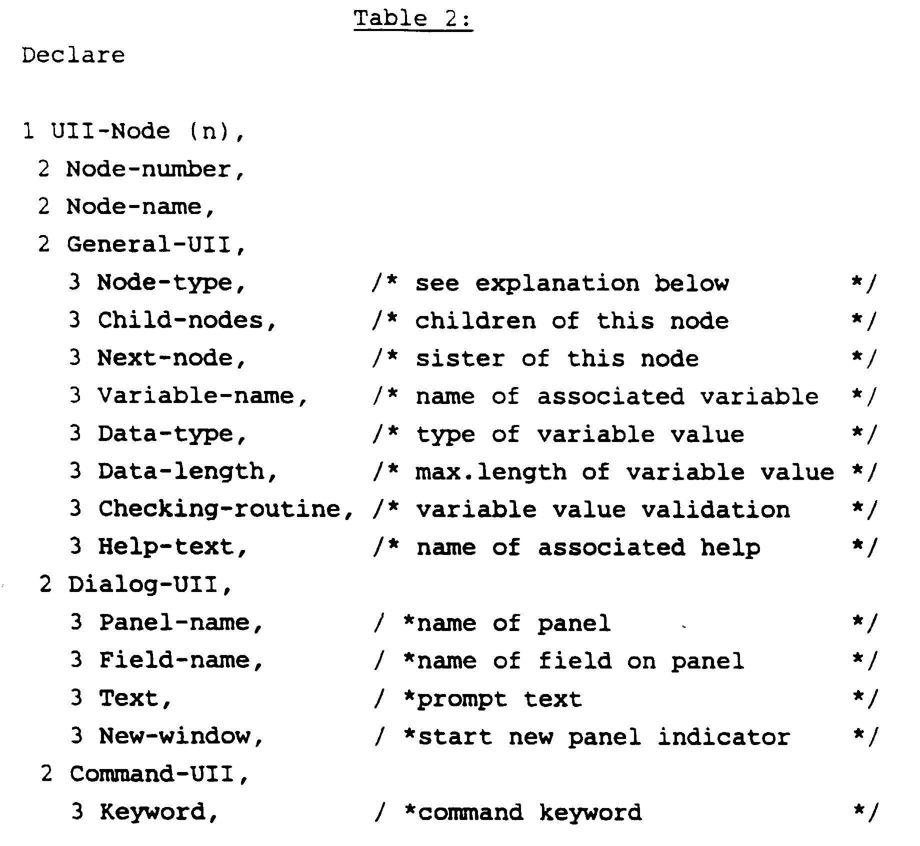

The Node-type may be 'AND-node', 'OR-node', 'IN-field', OUT-field', or "ALTERNATIVE' (of an OR-node). It may also be useful to support special node types for 'LIST's. The structure of the UII is expressed by storing the successor nodes of an AND-node, OR-node, LIST following these nodes. Such a list of successor nodes is terminated by an entry with Node-type = END.

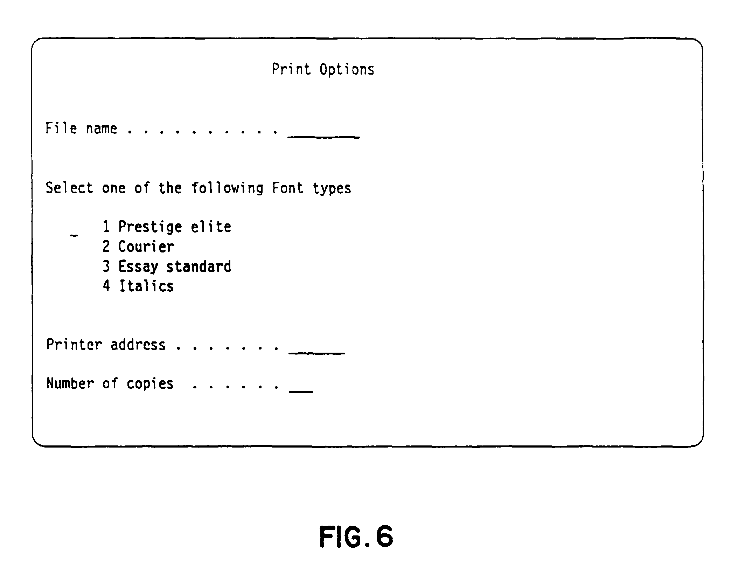

Table 3 shows the UII-table related to the later explained Example 3 and the panel in Fig. 6.

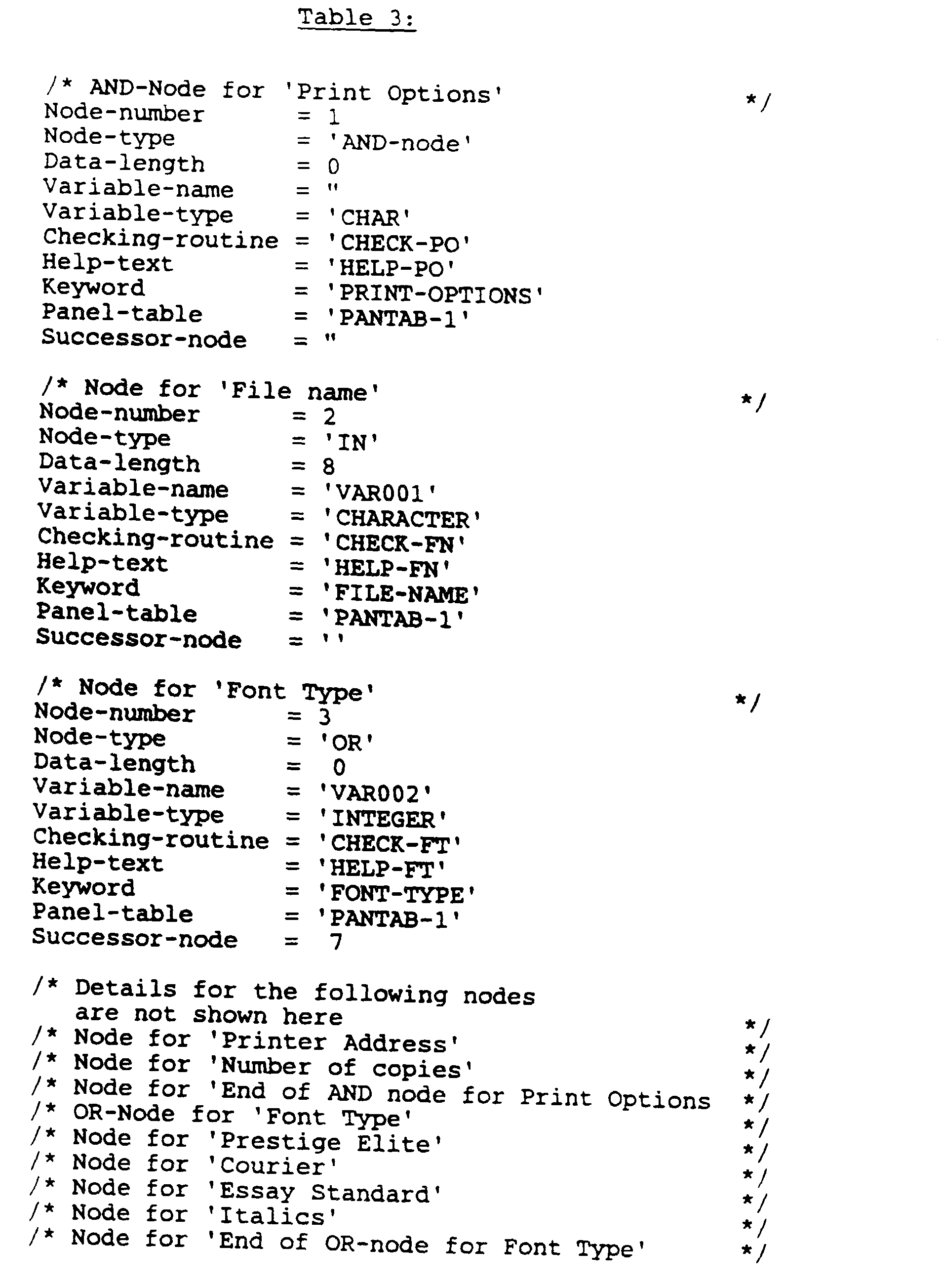

The above described structure is suitable for supporting the interface to a dialog manager (for a menu oriented display terminal interface) as well as for the implementation of the parsing for a command and/or program call interface.

As furthermore can be seen from Fig. 2 the generalized user interface layer is controlled by the information GP-UII from the UII-table. The different presentation front end programs PFE-1, PFE-2, etc. are controlled by the associated special part information SP-UII-1 and SP-UII-2 respectively. The presentation front end programs support the various user interface types.

The GUIL (program) uses the GP-UII from the UII (table) to provide the following functions:
a) a common interface for function programs to exchange data with the end user; this common interface makes the function programs independent from the actual user interface type,
b) facilities which are useful for all types of user interfaces;
   one example of such a facility is a command recording facility which records all specifications made by the user in a general way namely in the form which is accepted by the command interface and thus enables a "Replay" of user interface sessions,
c) an integration of the various interface types so that for example dynamic switching among them is possible.

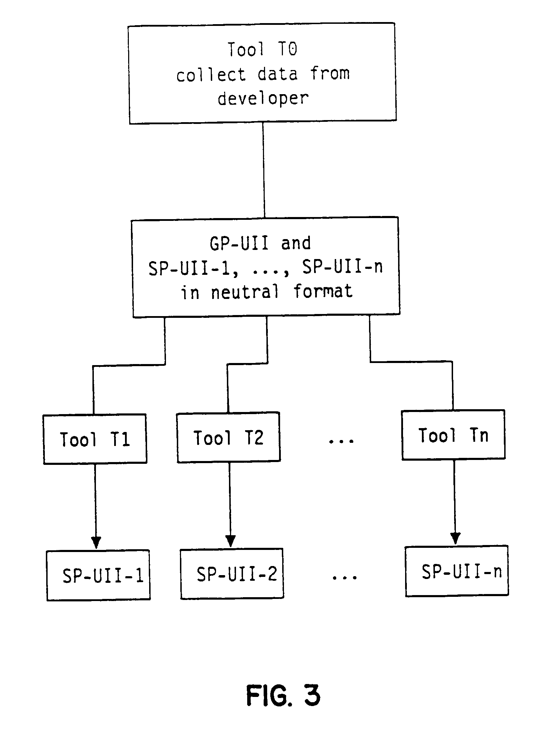

In connection with Fig. 3 development tools used in the development process are shown. With a tool TO data from a developer are collected so that a neutral form is established. Thus in neutral form the general part - user interface information, GP-UII and the special part - user interface information, SP-UII for the different user interface types is generated in neutral form. From there different tools T1 to Tn are used to generate the special part user interface information in specific form.

The user interface type specific part of the user interface control information (SP-UII), may be requested in a certain format. For example, the panel oriented dialog interface usually requires panel definitions in a format specified by some dialog manager component. Similarly, a speech input or output facility may request the definition of vocabularies in form of specific data sets. In order to ensure that these user interface type specific definitions are consistent, the concept providing an integration of multiple user interface types also includes an integrated solution for the development tools used to generate the various user interface type specific definitions.

The solution provided by the present invention is shown in Fig. 3. As shown in Fig. 3, the development process starts by defining the general part of the control information which is common to all the different user interface types. From there, the development continues by generating the user interface type specific definitions. The collection of this kind of information and the transformation into the format requested by the existing programs is supported by specific tools T1,..., Tn.

### Possible Notation for Specifying User Interface Information

In the preceding description, the UII has been described in some informal notation. Since the UII has to be specified by the developers of the various function programs, a well-defined language for specifying an UII is required. Below a possible notation for such a UII language is shown without the user interface type specific parts.

For the specification of an UII essentially two constructs are needed: a way to specify sets or lists of entities, and a way to specify alternatives. As a graphical representation, therefore, AND/OR graphs are an elegant way to express an UII. For the applications considered by the invention the UII notation described below has been used:
o If an item 'element-x' can be defined as a set of alternatives alternative-1, alternative-2, ..., alternative-n, this is expressed by
   **<select>** element-x
   **<alt>** alternative-1
   **<alt>** alternative-2
   ........
   **<alt>** alternative-n
   **<eselect>**
o If an item 'element-x' can be defined as consisting of a set of sub-items subitem-1, subitem-2, ..., subitem-n, this is expressed by
   **<set>** element-x
   **<in>** subitem-1
   **<in>** subitem-2
   .......
   **<in>** subitem-n
   **<eset>**
   The <in> units indicate input items. Alternatively, <out> may be used to indicate output data.
   In addition, the following conventions are used:
o Non-terminal symbols, i.e. symbols for which there exist other UII definitions, start either with the '%' character or use a <link> tag.
   Example:
   **<select>** option-x
   **<alt>** %further_details
   **<alt>** no
   **<eselect>**
   or
   **<select>** option-x
   **<link>** further_details
   **<alt>** no
   **<eselect>**
   The "further details" may be <link>ed in multiple <set> or <select> units.
o If. for a certain point in the UII, a list of items 'element-y' is required, this is described by adding the suffix '-**list'** to the item 'element-y'
   Example:
   **<set>** element-x
   **<in>** %element-y-list
   **<in>** element-Z
   **<eset>**
   It is then sufficient to have a further definition for 'element-y' (not 'element-y-list').
   The item 'element-x' will then contain all of the sub-items in 'element-y' and the sub-item 'element-z'.
   The 'element-y' will be described: -
   **<set>** element-y-list
   **<in>** subitem-1
   **<in>** subitem-2
   ...
   **<in>** subitem-n
   **<eset>**
   The use of the '-list' suffix is particularly useful when all of the sub-items must be handled together, e.g. when they must be all input at the same time, and nothing else may interrupt the input process.
o If an item 'element-x' has only the two alternatives 'YES' and 'NO', this can be expressed by adding the suffix '-**OPT**' to 'element-x'.
   Example:
   **<in>** element-x-**OPT**
   is equivalent to
   **<in>** %element-x
   **<select>** element-x
   **<alt>** YES
   **<alt>** NO
   **<end>**
o Comments may be placed by starting with '/*' and terminating with '*/',
   Example:
   /* This is a comment */

### Relation to Panel Types

The introduction of the UII concept in accordance with the invention allows independence from different types of communication devices, e. g. display, typewriter, speech I/O and user interface types, e. g. menu oriented, object oriented. The UII notation described above clearly supports this goal.

Looking at a particular device type special rules may be established for mapping the UII to the user interface constructs supported by this device type.

The following describes how the UII can be mapped to the various panel types which can be seen with a dialog oriented display terminal interface. As an example the panel types supported by the IBM CUA standard (IBM System Application Architecture - Common User Access Panel Design and User Interaction, SC26-4351) are considered; these are:

### 1. Menu Panel

The menu panel shows alternatives to be selected by the user. With character display terminals the alternatives are numbered or associated with mnemonic characters, with APA (all point addressable) display terminals so-called radio buttons may be used.

### 2. Entry Panel

Entry panels are used to enter values for data variables.

### 3. Mixed Entry and Menu Panel

Data entry and alternative selections may be mixed within a single panel.

### 4. List Panel

List panels are a useful interface to operate on lists of data records, for example on a file directory. Usually the lists are scrollable and there is a fixed set of actions shown at the panel which can be applied to the individual list items.

### 5. Information Panel

The information panel displays information such as help and tutorial text to the user.

In addition, it is described how e. g. special panel elements such as
o Action Bars and
o Multiple Choice Selection
are generated from a given UII.

### 1. Menu Panel

A <select> unit (if not embedded in any of the cases described below) results in a menu panel.

### Example 1:

<select> Communication Choices
<alt> Receive mail
<alt> Messages pending
<alt> Mail log
<alt> Mail status
<end>

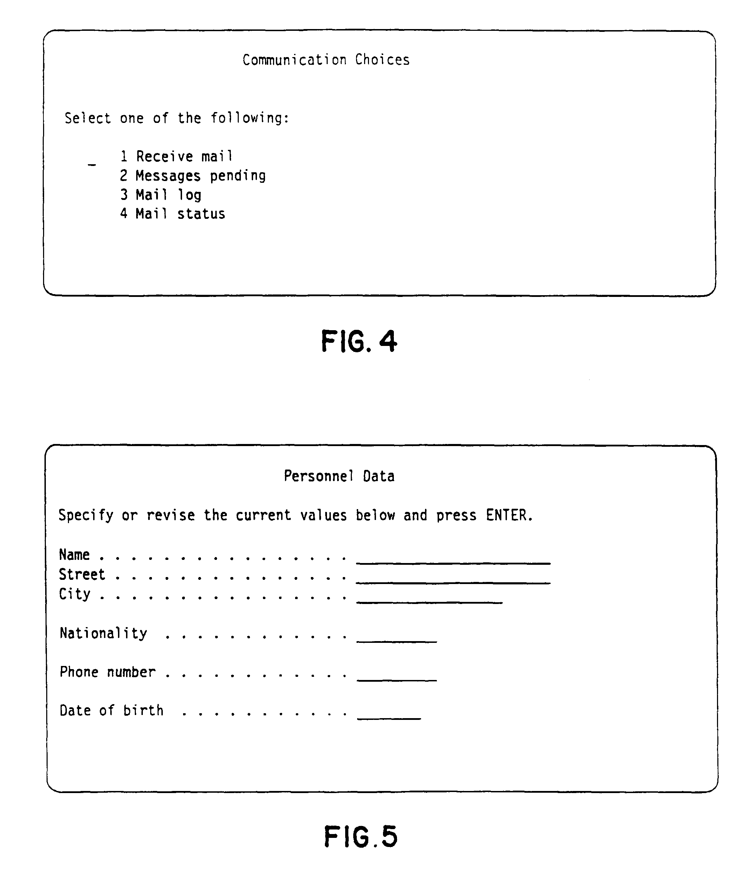

The resulting menu panel is depicted in Fig. 4.

### 2. Entry Panel

A plain <set> unit results in an entry panel.

### Example 2:

<set> Personnel Data
<in> Name
<in> Street
<in> City
<in> Nationality
<in> Phone number
<in> Date of birth
<eset>

The resulting menu panel is depicted in Fig. 5.

### 3. Mixed Entry and Menu Panel

A mixed entry and menu panel can be constructed by including <select> units within a <set> unit.

### Example 3:

<set> Print Options
<in> File name
<in> Font type
   <select>
   <alt> Prestige elite
   <alt> Courier
   <alt> Essay standard
   <alt> Italics
   <end>
<in> Printer address
<in> Number of copies
<eset>

The resulting menu panel is depicted in Fig. 6.

### 4. List Panel

The UII for a List Panel can be defined by use of the '-list' suffix described before in "Possible Notation for Specifying User Interface Information".

### Example 4:

<set> Device Maintenance
<in> Device-list
   <set>
   <in> Device-def-action
      <select>
      <alt> Add device
      <alt> Delete device
      <alt> Change device
      <alt> Display device characteristics
      <end>
<out> Device address
<out> Device type
<out> Model number
<eset>
<eset>

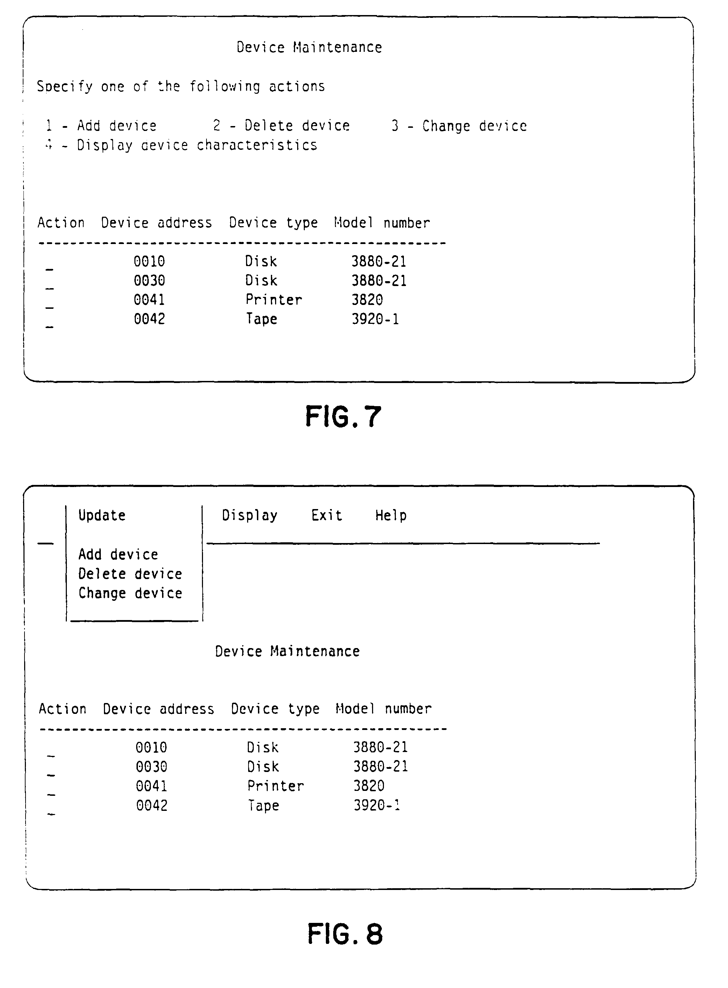

The resulting menu panel is depicted in Fig. 7.

If actions can be applied to the list, there are two ways to define them in the UII notation:
1. If the actions can be applied to individual list items, they must be defined within the list unit at the level of the <in> and <out> fields (see Example 4).
2. If the actions apply to the list as a whole or only to a single list item that must be defined outside the list unit.

The actions associated with the list can be specified as an Action Bar by using the conventions described below.

### 5. Information Panel

The information panel displays information to the user, but does not request any user input e.g. data entry or alternative selections). Since the UII (per definition) does not show explanatory texts, the only information left to be reflected in the UII of information panels is linkage information describing the panel flow. In addition, it may be useful to include, at least a summary of the information panel text in form of comments. Thus, the Example 5 shows the UII of a possible information panel with the successor panels 'Info-Panel-1' and 'Info-Panel-2'.

### Example 5:

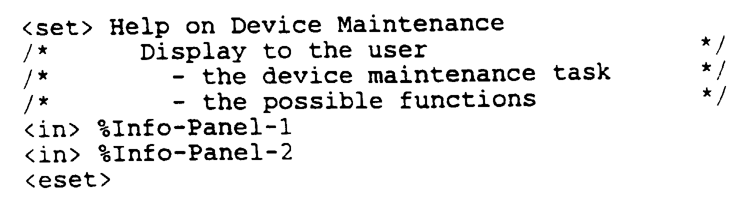

### 6. Specification of Action Bars

An action bar, in the definition of IBM System Application Architecture - Common User Access Panel Design and User Interaction, SC26-4351 is the area at the top of a panel showing a set of action types which can be applied to objects represented in the panel body. If an action type is selected, e. g. by use of a mouse device, a pulldown appears showing the alternative actions for this action type. An action bar can be constructed by use of the suffix '-actions' and by providing the appropriate <select> units. This is shown in Example 6.

### Example 6:

<set> Device Maintenance
<in> Device-list
   <set>
   <in> Device-def-actions
   <select>
   <alt> Update
      <select>
      <alt> Add device
      <alt> Delete device
      <alt> Change device
      <end>
   <alt> Display
      <select>
      <alt> Display device characteristics
      <alt> Display error recording
      <alt> Display connections
      <end>
      <end>
   <out> Device address
   <out> Device type
   <out> Model number
   <eset>
<eset>

The panel shown in Fig. 8 shows an Action Bar with a pulldown window for 'Update' in accordance with Example 6.

### 7. Specification of Multiple Choice Selection

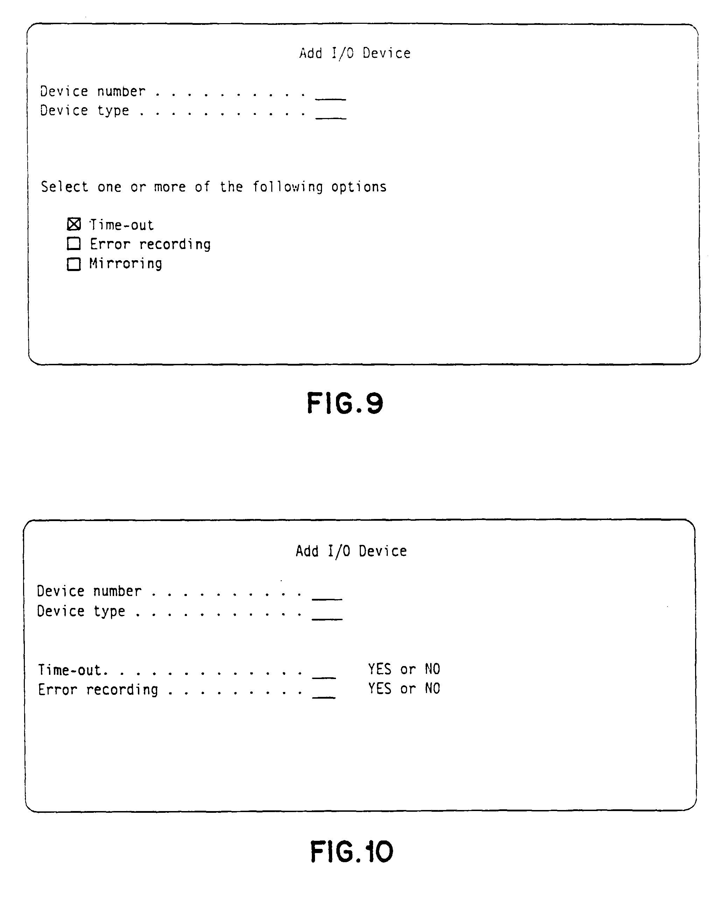

The <select> unit results in a so-called 'Single Choice Selection'. In addition to single choice selections the IBM CUA standard supports menus with 'Multiple Choice Selections' where the user may select multiple items from the given list. In the UII, multiple choice selections can be specified as a group of optional items using the '-OPT' suffix. Such a specification is shown in Example 7 and the resulting panel in Fig. 9.

### Example 7:

<set> Add I/O device
<in> Device number
<in> Device type
<in> Time-out-OPT
<in> Error recording-OPT
<in> Mirroring-OPT
<eset>

If the number of choice items is less than a certain number (e. g. 3) the tools used will generate entry fields instead of the check boxes which are used in general for multiple choice selections. In this case the resulting panel will appear as shown in Fig. 10.

### The Development Process for a User Interface

There are mainly two uses of the UII specification concept in the context of user interfaces:
1. As a design concept during the development process
2. As an interface which is actually implemented to separate function programs from the user interface program components.

This section addresses the first usage, primarily with respect to the development of a user interface for advanced display terminals.

The design of a user interface starts by defining the UII. This enables the application of several design activities to the relevant design information without looking at final user interface details. The following design activities for a user interface can be applied to the UII:

o Overall design of the dialog tree
   A typical user interface for display terminals can be expressed by a dialog tree (in many cases it is actually a directed graph). The design of such a dialog tree with arbitrary depth of details can be performed neatly in terms of the UII.
o Refinement of the dialog design
   The overall design of the dialog tree can be (stepwise) refined based on the UII. The UII is ideally suited for stepwise refinement. For the design of display terminal oriented user interfaces the refinement can even go as far as designing specific panel types as shown in "Relation to Panel Types".
o Defining and observing design guidelines
   There are many useful design guidelines which can be established for the design of a user interface. Many of them relate to aspects such as dialog structure and can be expressed and verified in terms of the UII.
o Design analysis for various purposes
   During the design of a user interface there are always situations where the design must be analyzed for various purposes. As an example, it may be required to compare the newly designed user interface with an existing one in terms of equivalence in the information communicated. Here, too, the UII eases the job by concentrating on the essential information.
o Design modifications
   It is obvious that design modifications are easier as long as unnecessary details are left out in the documentation.

After the (high level) design of the user interface is complete, additional details such as text refinement, panel layout design, exploitation of I/O device characteristics (e. g. color display) have to be defined. For the definition of dialogs for display terminals there usually exist languages and related tools which support the specification of this type of information.

An example of such a language is the IBM SAA Dialog (see IBM System Application Architecture Dialog Tag Language), which supports the definition of display oriented dialogs for SAA supported IBM computers. A so-called Expansion Tool translates and expands a dialog definition given in the UII into the IBM SAA Dialog Tag Language. Beside the UII, the Expansion Tool uses as input:

o a Variable Table
   which describes for each term appearing in the UII the name by which it is referenced in the function program, the length of the variable, and the name of the associated help panel;
o an Expand Profile
   which defines parameters of an expansion run, such as whether a command area is to be generated, the default cursor position, etc.

Table 4 shows the Dialog Tag Language (DTL) which was generated from the UII shown in Example 3 depicted in Fig. 6.

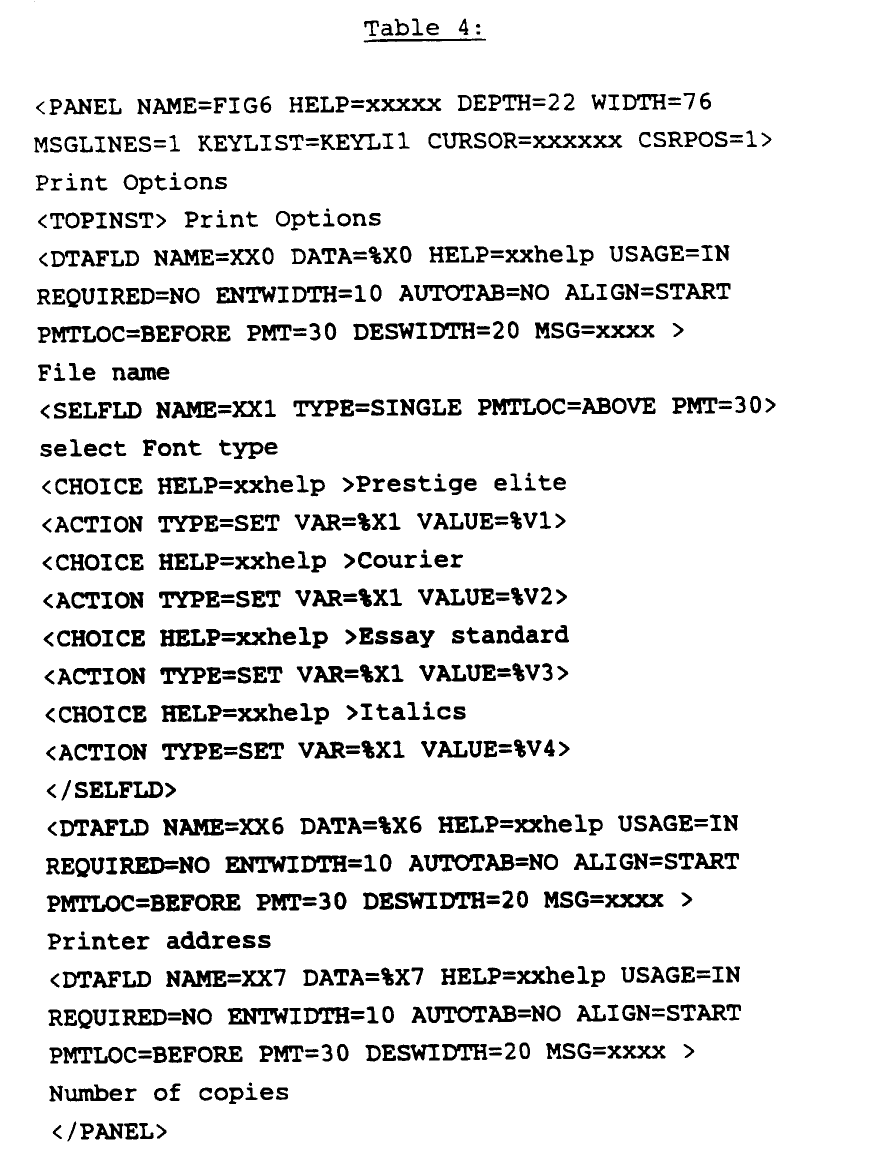

### Data Communication

The main purpose of a user interface is to communicate between the user on one side and the application program running in the computer on the other side. The data transmitted during the operation of the program - also called the session - from the user to the computer is termed user session data (USD). Since a variety of interface types are supported by the computer, the input USD needs to be stored in a format which is independent of the user interface type being used. This interface-independent type of storage will additionally allow the user during the same session to switch between different user interface types without losing any of the data which has previously been input using another interface type. The user interface-independent format in which the data is stored is termed a USD-list.

The manner in which data is collected for the USD-list will now be described by reference to Fig. 1. The UII graph shown in Fig. 1 is processed from the top downwards. For each node, data is obtained from the user and stored in the USD-list. There is no particular sequence in which the data has to be input since this may depend on the particular interface type chosen. Similarly, the way in which the data is obtained from the user is not relevant since this will also depend on the user interface type chosen. For each node processed, an entry is made in the USD-list consisting of the triple:
{Node-name, value, nesting-level}

The node name refers to the name of the node in the UII-graph, further details for each node are given in Table 1. The value depends on the node type as shown in Table 5:

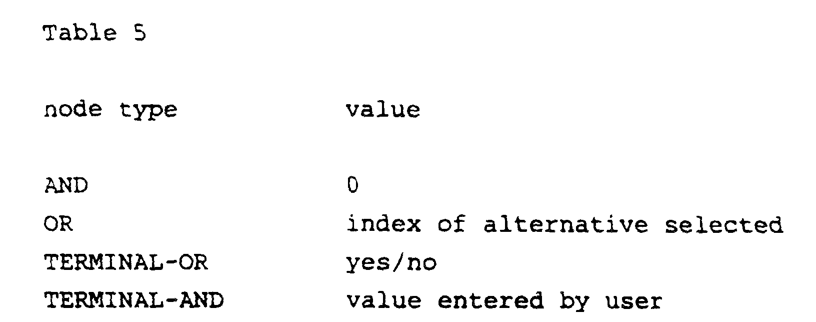

The data in the USD-list can be represented in a tree structure. The value of the nesting-level then gives the nesting level within the tree. For example node 1 in Fig. 1 will have a nesting-level value of 1 since it is the first entry in the tree. Nodes 2 to 5, which are child nodes of node 1, have a nesting-level value of 2.

Before data is obtained from the user, a check needs to be carried out whether the data is already available in the USD-list. This becomes particularly necessary when switching between different user interface types, because the two user interface types may apply different sequences for inputting data when processing the UII graph. A further check that is necessary when switching between interfaces is to ensure that when there is a group of sub-items that have to be treated together (i.e. the items are defined using a '-list' suffix), all of the items are treated before any further operations are carried out.

The storing of user session data into the USD-list has to be done in manner such that the structure of the tree can be determined. This is done by ensuring the triple relating to the top node in the UII-graph is at the top of the USD-list and that the triples relating to the lowest nodes in the UII-graph, i.e. those with the lowest nesting levels, are at the end of the USD-list. When a triple relating to another node has to be inserted into the USD-list, it is inserted into the USD-list after the triple for its father node but before other child nodes of its father node, i.e. other nodes with the same nesting level.

### Examples of USD-lists for different User Interface Types

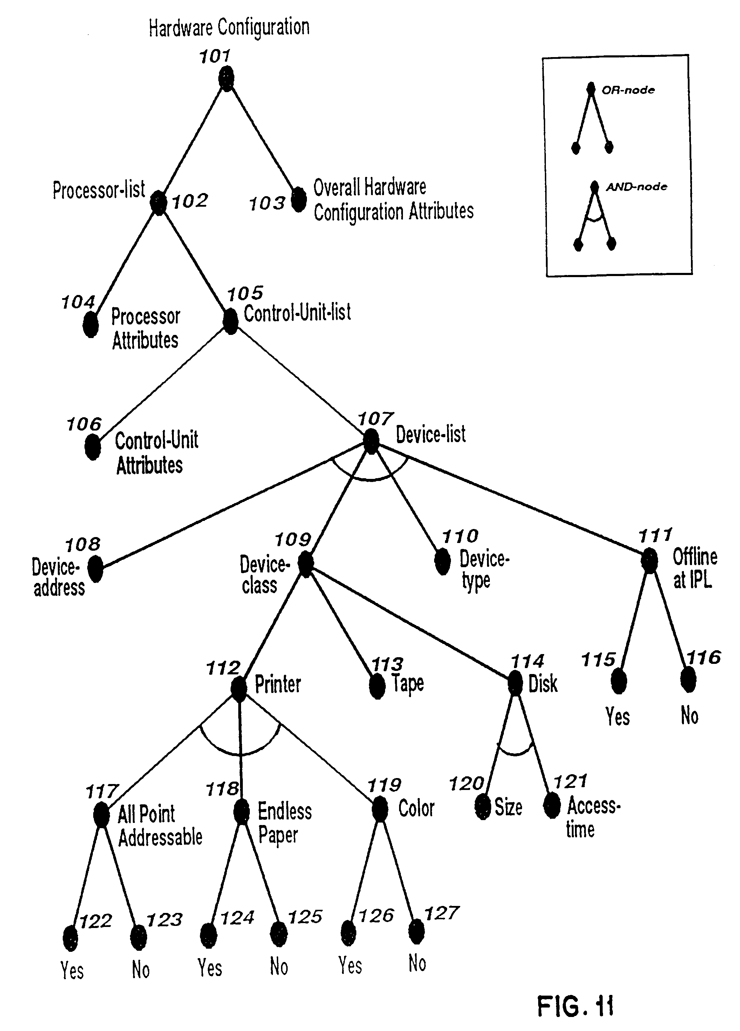

A few examples will illustrate how the USD-list is generated and its relationship to the UII. Suppose the user wishes to define the hardware configuration for a given system consisting of processors, control-units and devices. The UII-graph is shown in Fig. 11. The GP-UII will have the following form:

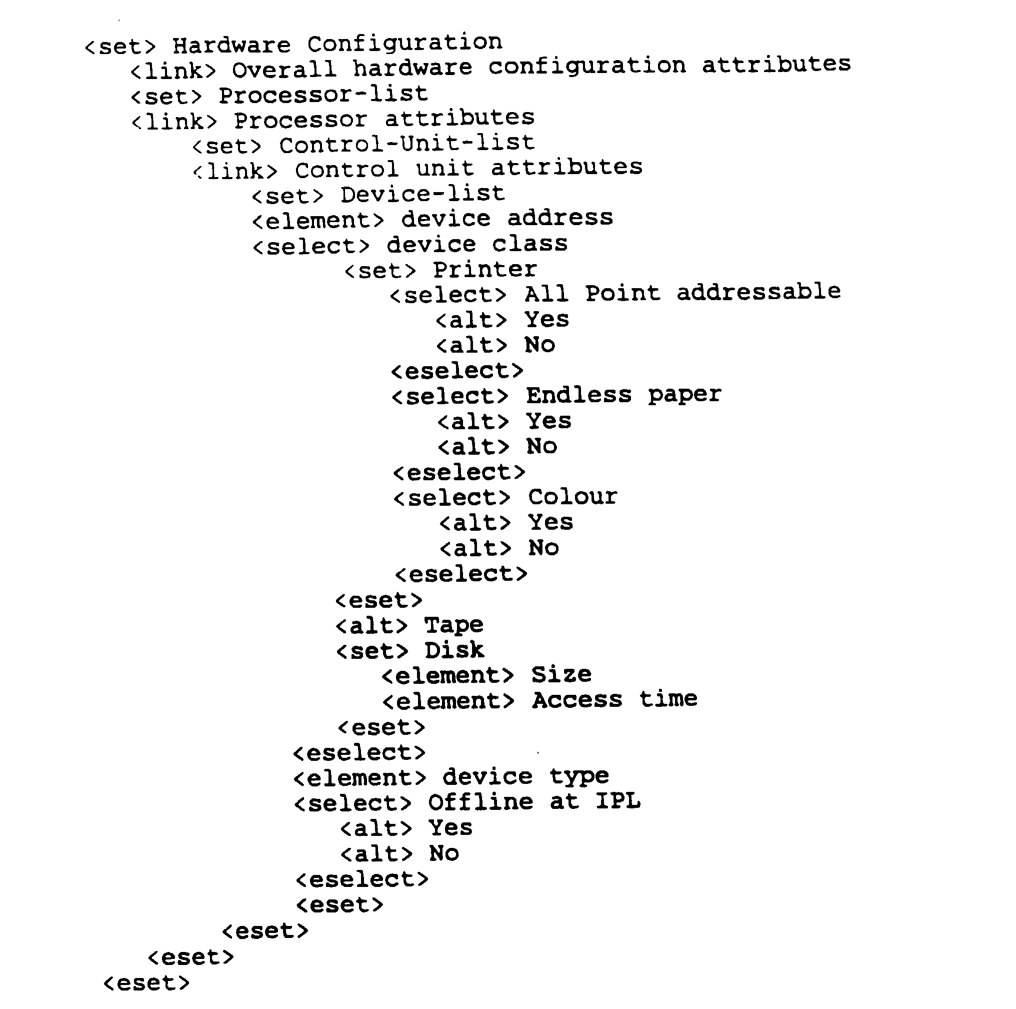

### Example 9 - dialog:

Now suppose that the user interface chosen is 'dialog', then dialog specific SP-UII's have to be associated with the UII. Thus the UII will have the following form, the capital letters indicating the SP-UII.

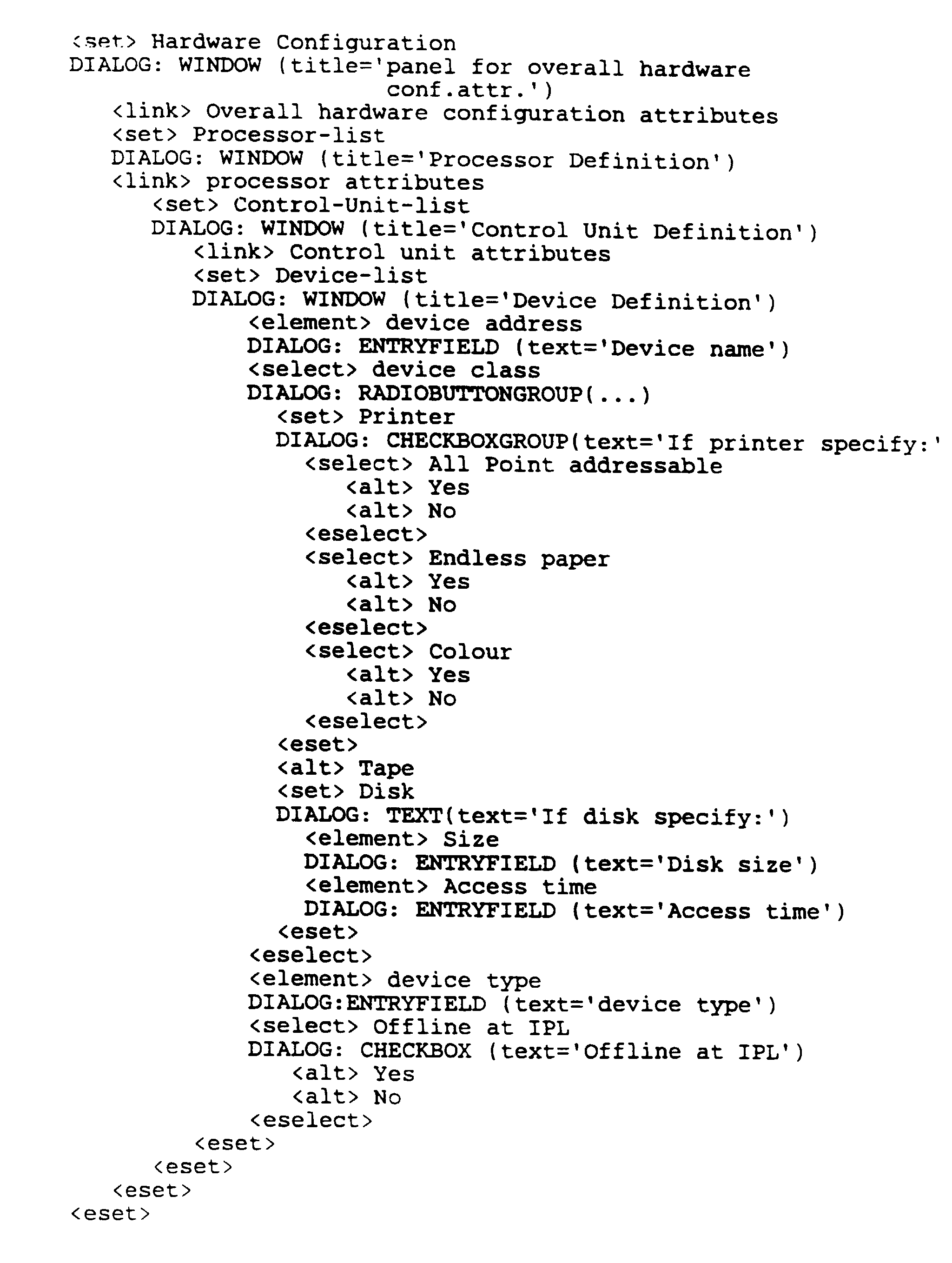

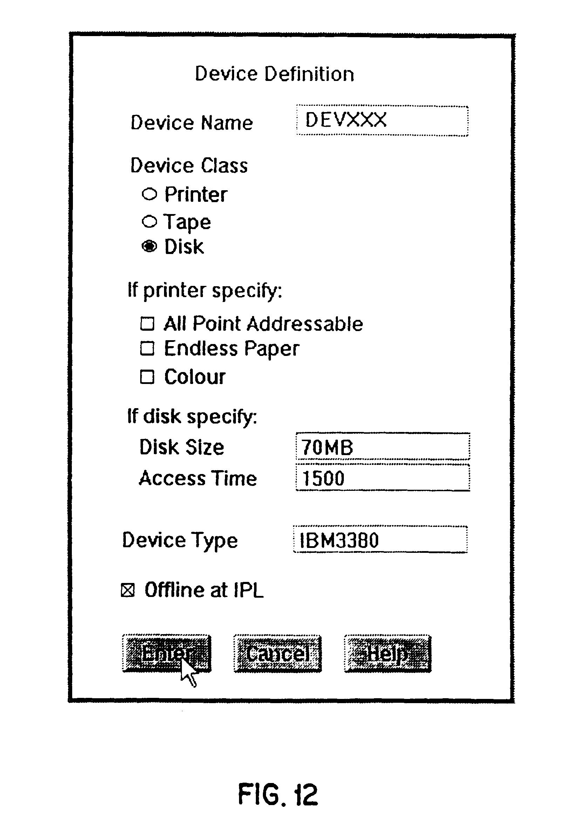

A panel resulting from UII specification <set> Device-list and all UII entries nested into that <set> is shown in Fig. 12 together with the data input by the user into the system. This produces the following USD-list:

| | | |
|---|---|---|
| Device-list | 0 | 3 |
| device address | DEVXXX | 4 |
| device class | 3 | 4 |
| Disk | 5 | 5 |
| Size | 70MB | 6 |
| Accesstime | 15000 | 6 |
| device type | IBM3380 | 4 |
| Offline at IPL | 1 | 4 |
| Offline at IPL.YES | 0 | 5 |

The panels are created by a user interface manager, e.g. a dialog manager, which is controlled by the SP-UII. If, at the point of switching to dialog interface type from another interface type, part of the USD-list has already been generated then the data in the USD-list is used to initialise the respective input fields of the dialog panels. Should it be required, then these input fields could be protected from over-typing by the dialog manager.

### Example 10 - Graphic:

If the user interface is graphic, then graphic SP-UII's need to be associated with the UII. This is shown as follows.

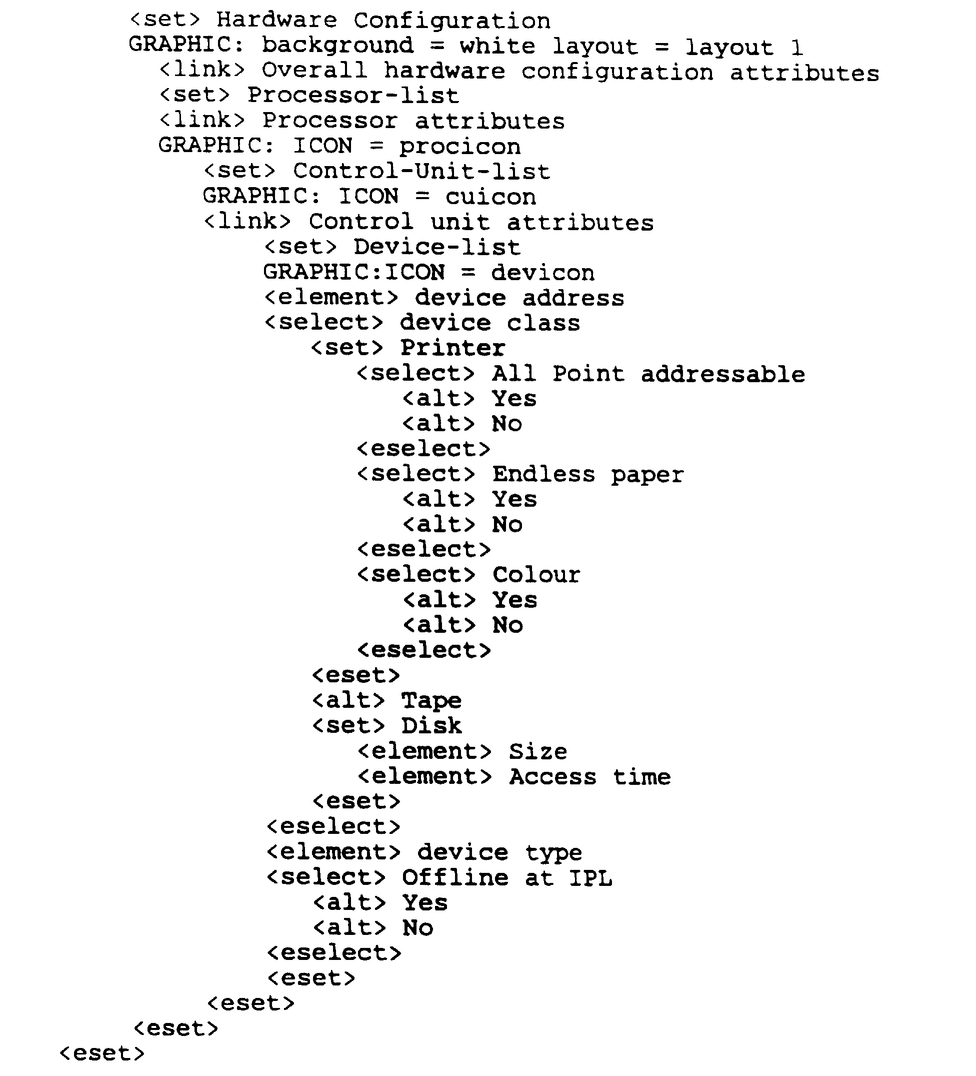

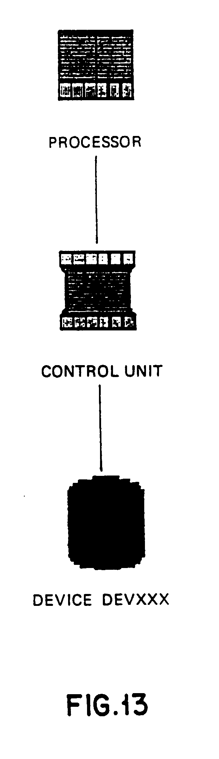

A window resulting from these specifications is shown in Fig. 13. This window is produced by a graphical user interface manager, which uses the SP-UII. The graphical user interface manager also handles the entries into the USD-list. The USD-list generated using the example of Fig. 13 has the following form:

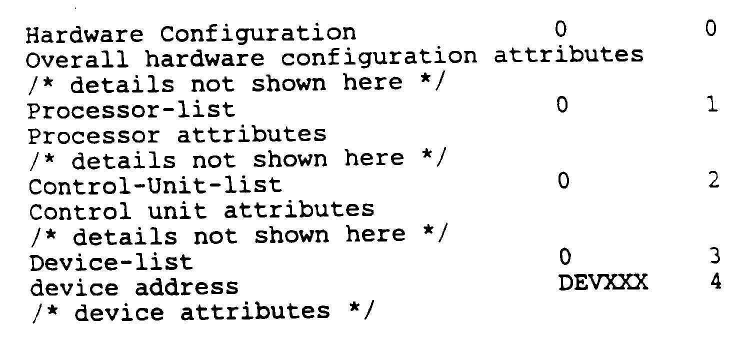

For simplicity the attributes of the overall hardware configuration, processor, control units or devices are not shown in detail. These would be added into the USD-list by further manipulation of windows.

### Example 11 - Command:

In a command user interface, SP-UII's defining the command syntax have to be added to the UII. This results as follows:

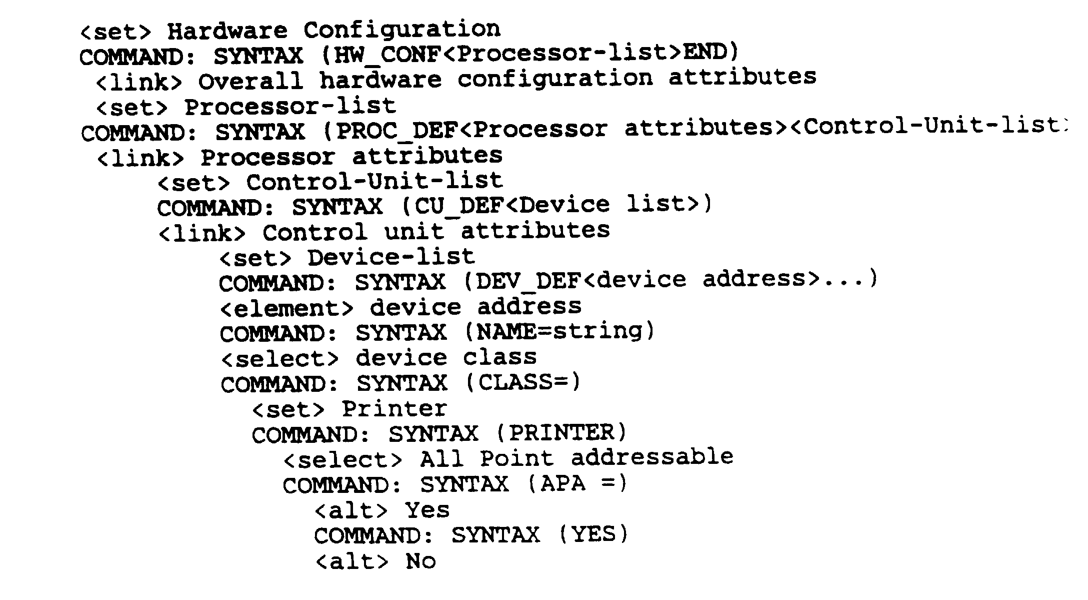

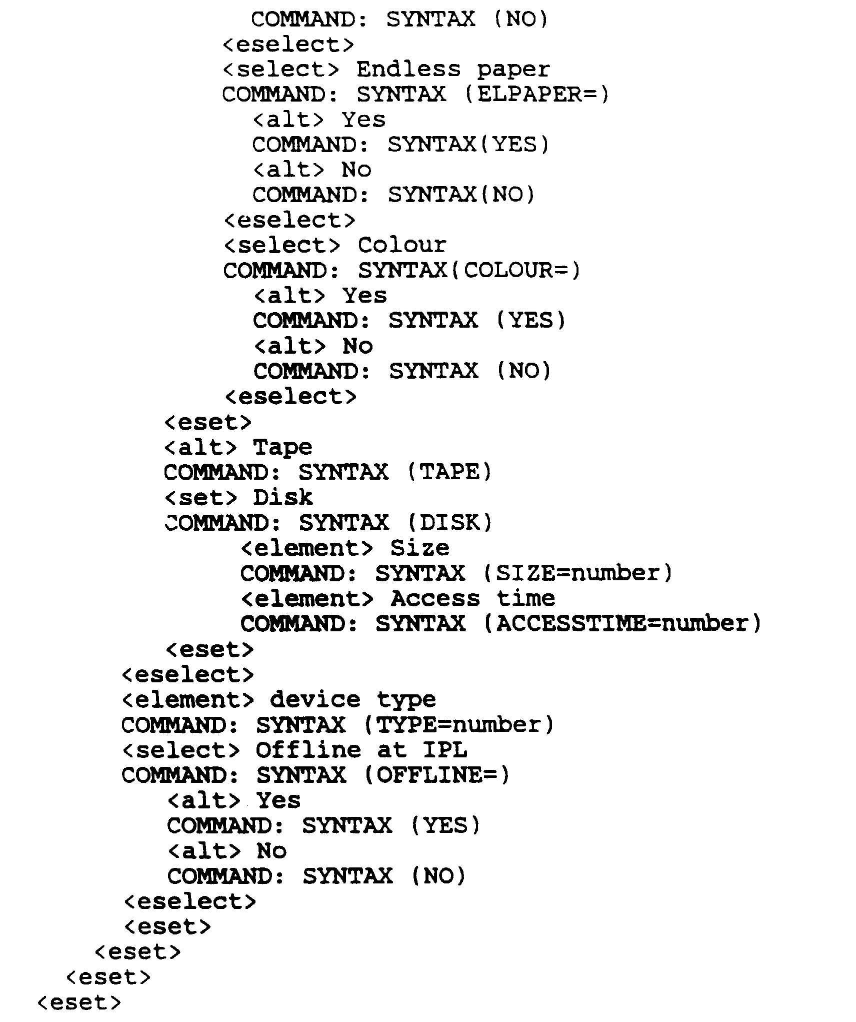

So a possible valid command defining a hardware configuration would be as follows.

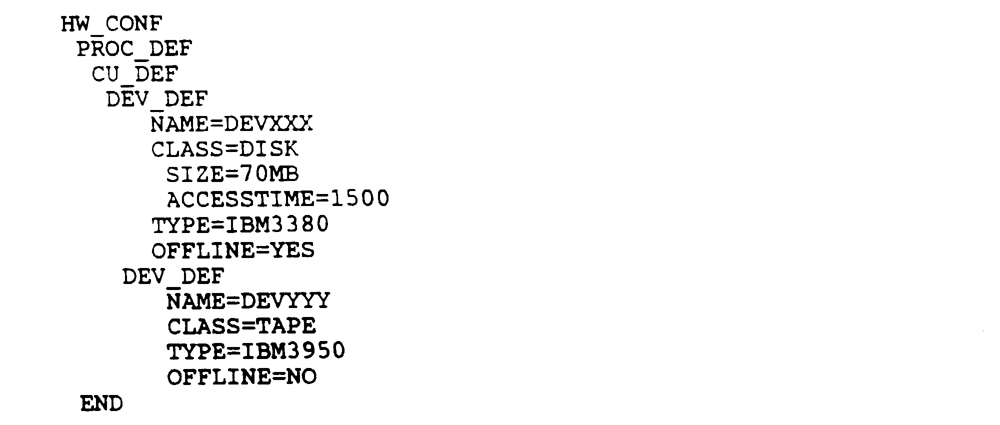

User input from this command procedure would be mapped by a command parser into an USD-list. This would result in the following USD-list:

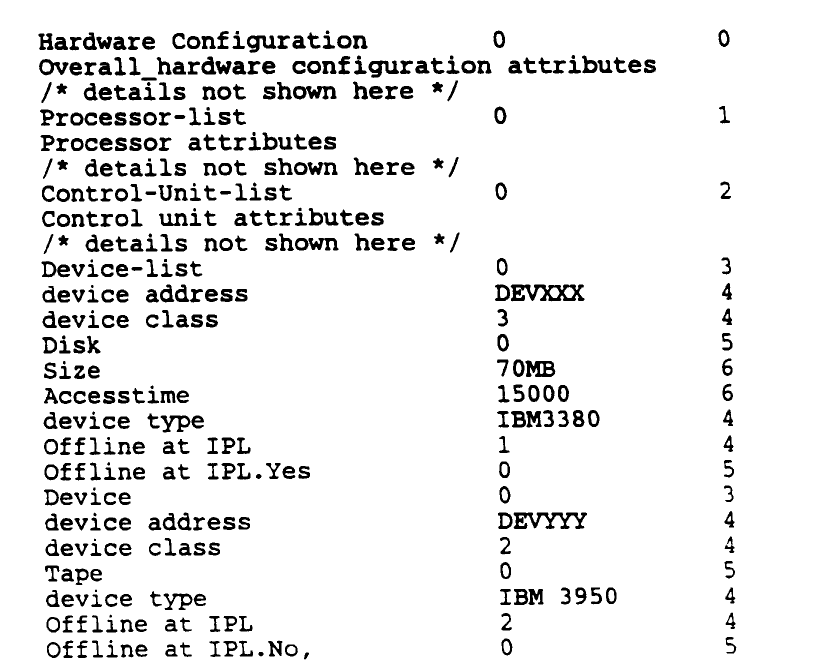

In order to create the USD-list as shown above, it is necessary that the command parser is controlled by the UII. For the switching from an arbitrary user interface type to COMMAND mode a 'Text Generator' (the reverse function to a parser) being controlled by the UII and using as input an USD-list is required.

### Example 12 - Switching:

Let us now suppose that a user wishes to define the hardware configuration using several user interface types. A sample scenario would be as follows. First the user starts with a command list.

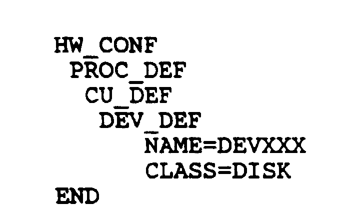

This would result in the following USD-list:

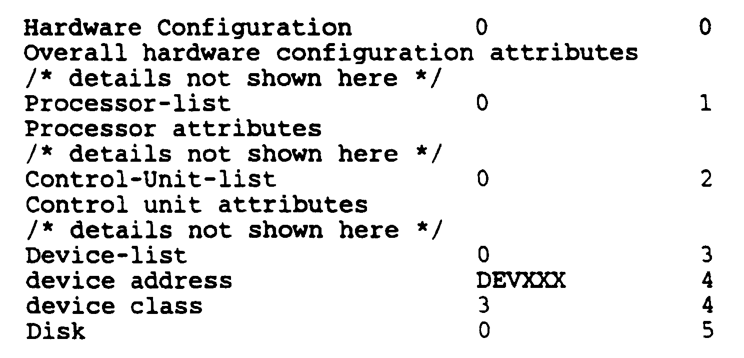

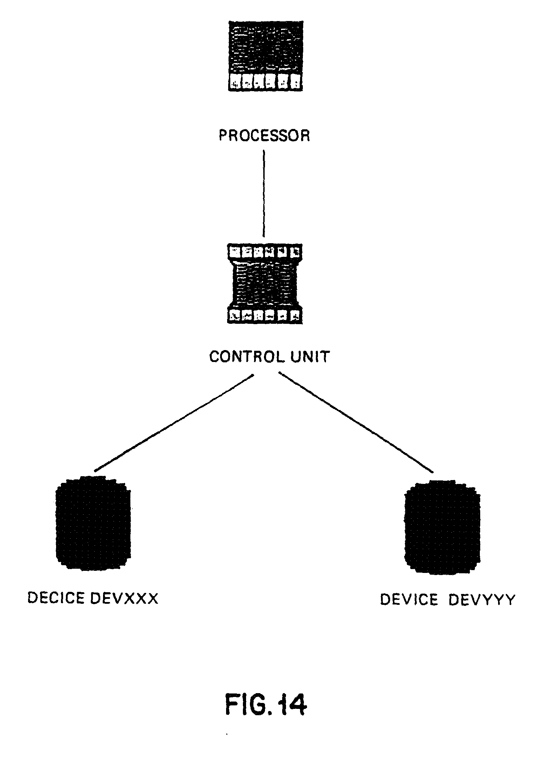

The user then switches to user interface type = GRAPHIC which would show him or her the window as shown in Fig. 13. In graphic mode the user may add another device by graphically copying DEVXXX to DEVYYY (see Fig. 14). This would extent the USD-list by the following entries:

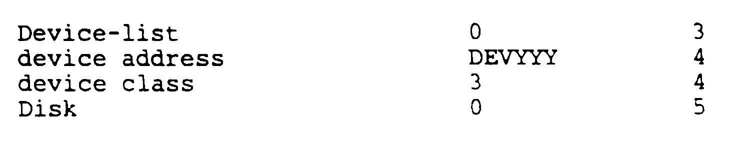

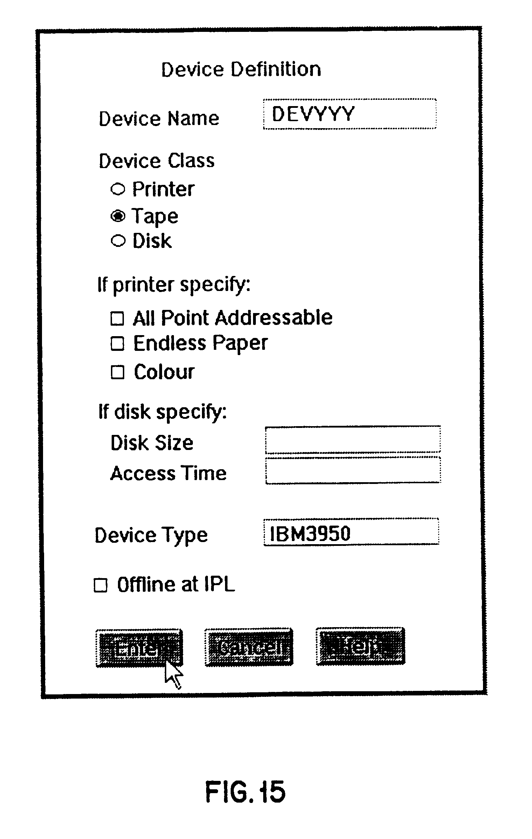

For the new added device the user now wants to complete and update the device attributes by use of the DIALOG type of user interface. This would result in a dialog panel as shown in Fig. 15. The panel shows already the updated device attributes.

After these updates, the USD-list looks as follows:

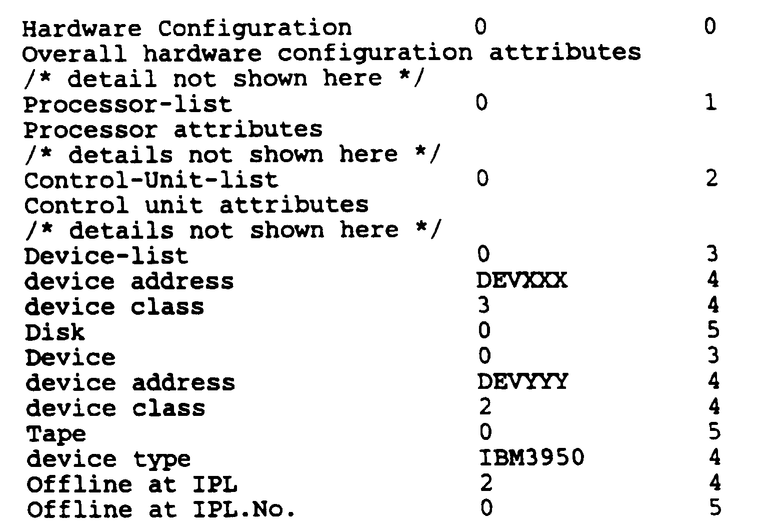

Finally, the user may switch back to command mode to get a 'textual view' of what has been defined so far and possibly do further definitions in the command mode. By use of a text editor, for example the user may complete the attributes for DEVXXX:

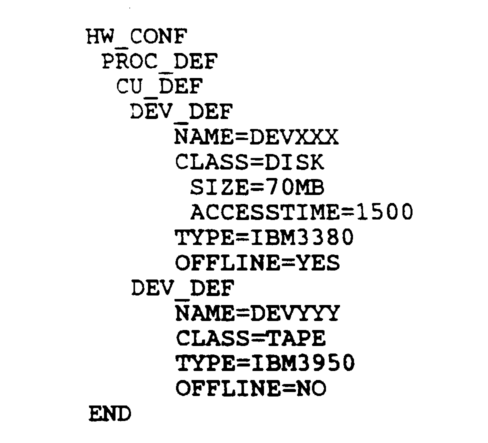

Of course, the user is not restricted to this sequence of operations when defining the overall hardware configuration. He or she is free to chose whichever type of interface is appropriate or easiest to work with.

## Claims

1. Adaptable user interface system comprising means for integrating in a computer a number of different user interface types each having one of different input, output or dialog modes, and means for allowing a user initiated switching between different input, output or dialog modes,
characterized by:
means (UII) for storing in form of a directed graph user interface information comprising sets of information each associated to a node of said directed graph;
each set of information associated to a node of said directed graph comprising a first part (GP-UII) common to all of said different user interface types and a second part (SP-UII1, SP-UII2) assigned to one of said different user interface types;
each of said second parts comprising subsets of interface information specifying a number of alternative modes of operation which the interface type assigned to said node is able to perform;
means (GUIL) for selecting a user interface type by accessing the interface information of at least one of said nodes under the control of presentation front-end programs (PFE-1, PFE-2) each representing one of said different user interface types; and
means for selecting one of said alternative modes of operation by switching between said subsets of said second part of said accessed interface information.

2. A system according to claim 1, wherein the nodes of said directed graph are AND nodes and/or OR nodes specifying the connection to the node or nodes of the next lower level of the directed graph.

3. A system according to claim 1, comprising means (GUIL) for transforming said user interface information into control information specifying characteristics of the different user interface types presently active.

4. A system according to claim 3, comprising one or more function program means that invokes said transforming means (GUIL) and that implements the function semantics of the programming system in a user interface type independent way.

5. A system according to one of the claims 1 to 4, wherein said transforming means (GUIL) are controlled by said first part (GP-UII) of said user interface information, and wherein said second part (SP-UII1, SP-UII2) controls the associated user interface types via said respective presentation front end programs (PFEs).

6. A system according to one of the claims 1 to 5, comprising means (USD-list) for storing user session data (USD) in an user interface-independent format and in relationship to said directed graph in that the data obtained from a user are related to one of said nodes of said directed graph by having assigned a node name and the nesting level value.

7. Method for integrating In a computer having an adaptable user interface system a number of different user interface types each having one of different input, output or dialog modes, and for allowing a user initiated switching between different input, output or dialog modes,
characterized by the steps of:
storing in form of a directed graph user interface information comprising sets of information each associated to a node of said directed graph;
associating each set of information to a node of said directed graph comprising a first part (GP-UII) common to all of said different user interface types and a second part (SP-UII1, SP-UII2) assigned to one of said different user interface types, wherein each of said second parts comprising subsets of interface information specifying a number of alternative modes of operation which the interface type assigned to said node is able to perform;
selecting a user interface type by accessing the interface information of at least one of said nodes under the control of presentation front-end programs (PFE-1, PFE-2) each representing one of said different user interface types; and
selecting one of said alternative modes of operation by switching between the said subsets of said second part of said accessed interface information.

8. A method according to claim 7, wherein the nodes of said directed graph are AND nodes and/or OR nodes specifying the connection to the node or nodes of the next lower level of the directed graph.

9. A method according to claim 7, further comprising the step of transforming said user interface information into control information specifying characteristics of the different user interface types, presently active.

10. A method according to claim 9, further comprising the step of implementing the function semantics of the programming system in a user interface type independent way.

11. A method according to one of the claims 7 to 10, wherein said first part (GP-UII) of said user interface information controls said transforming of said user interface information into said control information, and wherein said second part (SP-UII1, SP-UII2) of said user interface information controls the associated user interface type via one of said presentation front end programs (PFEs).

12. A method according to one of the claims 1 to 11, further comprising the step of storing user session data (USD) in an user interface-independent format, wherein said user session data are organized in relationship to said directed graph in that the data obtained from a user relate to one of said nodes of said directed graph by having assigned a node name and the nesting level value.

## Patentansprüche

1. Anpaßbares Benutzerschnittstellensystem mit einem Mittel zur Integration mehrerer unterschiedlicher Benutzerschnittstellentypen in ein Computersystem, wobei jeder Typ einen anderen Eingabe-, Ausgabe- oder Dialogmodus und ein Mittel, das eine benutzerinitiierte Schaltung zwischen verschiedenen Eingabe-, Ausgabe- oder Dialogmodusarten ermöglicht, aufweist,
folgendermaßen charakterisiert:
ein Mittel (UII) zur Speicherung von Informationen in Form einer gerichteten Graph-Benutzerschnittstelleninformation, wobei die Informationen aus mehreren Informationsteilen bestehen, von denen jeder einem Knoten des genannten gerichteten Graphen zugeordnet ist;
jeder Informationsteil ist einem Knoten des genannten gerichteten Graphs zugeordnet, der aus einem ersten Teil (GP-UII), der allen genannten unterschiedlichen Benutzerschnittstellentypen gemeinsam ist, und einem zweiten Teil (SP-UII1, SP-UII2) besteht und die einem der genannten unterschiedlichen Benutzerschnittstellentypen zugeordnet sind;
jeder der genannten zweiten Teile umfaßt Untergruppen von Schnittstelleninformationen, die eine bestimmte Anzahl von Alternativbetriebsmodusarten angeben, die der Schnittstellentyp, der dem genannten Knoten zugeordnet ist, ausführen kann;
ein Mittel (GUIL) zur Auswahl eines Benutzerschnittstellentyps durch Aufruf der Schnittstelleninformation mindestens eines der genannten Knoten unter der Steuerung von Präsentationsprogrammen (PFE-1, PFE-2), von denen jedes einen der genannten unterschiedlichen Benutzerschnittstellentypen darstellt; und
ein Mittel zur Auswahl einer der genannten Alternativbetriebsmodusarten durch Umschaltung zwischen den genannten Untergruppen des genannten zweiten Teils der genannten aufgerufenen Schnittstelleninformation.

2. Ein System gemäß Anspruch 1, bei dem die Knoten des genannten gerichteten Graphen AND-Knoten und/oder OR-Knoten sind, die die Verbindung zum Knoten oder zu den Knoten der nächstniedrigeren Ebene des gerichteten Graphen angeben.

3. Ein System gemäß Anspruch 1, das ein Mittel (GUIL) zur Umwandlung der genannten Benutzerschnittstelleninformationen in Steuerinformationen umfaßt, die die Eigenschaften der verschiedenen Benutzerschnittstellentypen angeben.

4. Ein System gemäß Anspruch 3, das ein oder mehrere Funktionsprogrammittel umfaßt, das das genannte Umwandlungsmittel (GUIL) umfaßt und das die Funktionssemantik des Programmierungssystems auf eine Weise implementiert, die vom Benutzerschnittstellentyp unabhängig ist.

5. Ein System gemäß einem der Ansprüche 1 bis 4, wobei die genannten Umwandlungsmittel (GUIL) vom genannten ersten Teil (GP-UII) der genannten Benutzerschnittstelleninformation gesteuert werden, und wobei der genannte zweite Teil (SP-UII1, SP-UII2) die damit in Zusammenhang stehenden Benutzerschnittstellentypen über die genannten entsprechenden Präsentationsprogramme (PFEs) steuert.

6. Ein System gemäß einem der Ansprüche 1 bis 5, das Mittel (USD-Liste) zur Speicherung von Benutzersitzungsdaten (USD) in einem von der Benutzerschnittstelle unabhängigen Format im Verhältnis zum genannten gerichteten Graph umfaßt, und zwar in dem Sinne, daß die Daten, die von einem Benutzer empfangen werden, sich auf einen der genannten Knoten des genannten gerichteten Graph beziehen, indem ihnen ein Knotenname und der Nesting-Wert zugeordnet wird.

7. Verfahren zur Integration einer Mehrzahl unterschiedlicher Benutzerschnittstellentypen in einen Computer mit einem anpaßbaren Benutzerschnittstellensystem, wobei jeder dieser Typen einen anderen Eingabe-, Ausgabe- oder Dialogmodus aufweist und eine vom Benutzer initiierte Umschaltung zwischen verschiedenen Eingabe-, Ausgabe- oder Dialogmodusarten ermöglicht,
folgendermaßen charakterisiert:
Speicherung von Informationen in Form einer gerichteten Graph-Benutzerschnittstelleninformation, wobei die Informationen aus mehreren Informationsteilen bestehen, von denen jeder einem Knoten des genannten gerichteten Graphen zugeordnet ist;
jeder Informationsteil ist einem Knoten des genannten gerichteten Graphs zugeordnet, der aus einem ersten Teil (GP-UII), der allen genannten unterschiedlichen Benutzerschnittstellentypen gemeinsam ist, und einem zweiten Teil (SP-UII1, SP-UII2) besteht und die einem der genannten unterschiedlichen Benutzerschnittstellentypen zugeordnet sind, wobei jeder der genannten zweiten Teile Untergruppen von Schnittstelleninformationen umfaßt, die eine bestimmte Anzahl von Alternativbetriebsmodusarten angeben, die der Schnittstellentyp, der dem genannten Knoten zugeordnet ist, ausführen kann;
Auswahl eines Benutzerschnittstellentyps durch Aufruf der Schnittstelleninformation mindestens eines der genannten Knoten unter der Steuerung von Präsentationsprogrammen (PFE-1, PFE-2), von denen jedes einen der genannten unterschiedlichen Benutzerschnittstellentypen darstellt; und
Auswahl einer der genannten Alternativbetriebsmodusarten durch Umschaltung zwischen den genannten Untergruppen des genannten zweiten Teils der genannten aufgerufenen Schnittstelleninformation.

8. Ein Verfahren gemäß Anspruch 7, bei dem die Knoten des gerichteten Graphen AND-Knoten und/oder OR-Knoten sind, die die Verbindung zum Knoten oder zu den Knoten der nächstniedrigeren Ebene des gerichteten Graphen angeben.

9. Ein System gemäß Anspruch 7, das einen Schritt zur Umwandlung der genannten Benutzerschnittstelleninformationen in Steuerinformationen umfaßt, die die Eigenschaften der verschiedenen Benutzerschnittstellentypen angeben.

10. Ein System gemäß Anspruch 9, das weiterhin den Schritt der Implementierung der Funktionssemantik des Programmierungssystems in einer vom Benutzerschnittstellentyp unabhängigen Weise umfaßt.

11. Ein Verfahren gemäß einem der Ansprüche 7 bis 10, wobei der genannte erste Teil (GP-UII) der genannten Benutzerschnittstelleninformation die Umwandlung der genannten Benutzerschnittstelleninformation in die genannten Steuerinformationen steuert, und wobei der genannte zweite Teil (SP-UII1, SP-UII2) der genannten Benutzerschnittstelleninformationen die damit in Zusammenhang stehenden Benutzerschnittstellentypen über eines der genannten Präsentationsprogramme (PFEs) steuert.

12. Ein Verfahren gemäß einem der Ansprüche 1 bis 11, das weiterhin den Schritt der Speicherung von Benutzersitzungsdaten (USD) in einem von der Benutzerschnittstelle unabhängigen Format umfaßt, und wobei die genannten Benutzersitzungsdaten in einer Beziehung mit dem genannten gerichteten Graph organisiert sind, und zwar in dem Sinne, daß die Daten, die von einem Benutzer empfangen werden, sich auf einen der genannten Knoten des genannten gerichteten Graph beziehen, indem ihnen ein Knotenname und der Nesting-Wert zugeordnet wird.

## Revendications

1. Système d'interfaces d'utilisateur adaptable comprenant des moyens destinés à intégrer dans un ordinateur un certain nombre de types d'interfaces d'utilisateur différents comportant chacun l'un parmi différents modes d'entrée, de sortie ou de dialogue, et des moyens destinés à permettre une commutation initialisée par l'utilisateur entre différents modes d'entrée, de sortie ou de dialogue,
caractérisé par :
un moyen (UII) destiné à mémoriser sous forme d'un graphe orienté des informations d'interfaces d'utilisateur comprenant des ensembles d'informations, chacun étant associé à un noeud dudit graphe orienté,
chaque ensemble d'informations associé à un noeud dudit graphe orienté comprenant une première partie (GP-UII) commune à la totalité desdits types d'interfaces d'utilisateur différents et une seconde partie (SP-UII1, SP-UII2) affectée à l'un desdits types d'interfaces d'utilisateur différents,
chacune desdites secondes parties comprenant des sous-ensembles d'informations d'interfaces spécifiant un certain nombre de modes secondaires de fonctionnement, qu'est capable de réaliser le type d'interface affecté audit noeud,
un moyen (GUIL) destiné à sélectionner un type d'interface d'utilisateur en accédant aux informations d'interfaces d'au moins l'un desdits noeuds sous la commande des programmes frontaux de présentation (PFE-1, PFE-2) représentant chacun l'un desdits types d'interfaces d'utilisateur différents, et
un moyen destiné à sélectionner l'un desdits modes secondaires de fonctionnement par une commutation entre lesdits sous-ensembles de ladite seconde partie desdites informations d'interfaces auxquelles on accède.

2. Système selon la revendication 1 dans lequel les noeuds dudit graphe orienté sont des noeuds ET et/ou des noeuds OU spécifiant la connexion au noeud ou aux noeuds du niveau inférieur suivant du graphe orienté.

3. Système selon la revendication 1, comprenant des moyens (GUIL) destinés à transformer lesdites informations d'interfaces d'utilisateur en informations de commande spécifiant les caractéristiques des différents types d'interfaces d'utilisateur.

4. Système selon la revendication 3 comprenant un ou plusieurs moyens de programme de fonction qui invoquent lesdits moyens de transformation (GUIL) et qui réalisent les sémantiques de fonction du système de programmation d'une façon indépendante du type d'interface d'utilisateur.

5. Système selon l'une des revendications 1 à 4, dans lequel lesdits moyens de transformation (GUIL) sont commandés par ladite première partie (GP-UII) desdites informations d'interfaces d'utilisateur, et dans lequel ladite seconde partie (SP-UII1, SP-UII2) commande les types d'interfaces d'utilisateur associés par l'intermédiaire desdits programmes frontaux de présentation respectifs (PFE).

6. Système selon l'une des revendications 1 à 5, comprenant un moyen (liste USD) destiné à mémoriser des données de session d'utilisateur (USD) sous un format indépendant de l'interface d'utilisateur et en relation avec ledit graphe orienté en ce que les données obtenues à partir d'un utilisateur sont liées à l'un desdits noeuds dudit graphe orienté par le fait d'affecter un nom de noeud et la valeur du niveau d'imbrication.

7. Procédé d'intégration dans un ordinateur comprenant un système d'interfaces d'utilisateur adaptable, d'un certain nombre de types d'interfaces d'utilisateur différents comportant chacun l'un parmi différents modes d'entrée, de sortie ou de dialogue, et destiné à permettre une commutation initialisée par l'utilisateur entre les différents modes d'entrée, de sortie ou de dialogue,
caractérisé par les étapes consistant à :
mémoriser sous forme d'un graphe orienté, des informations d'interfaces d'utilisateur comprenant des ensembles d'informations dont chacun est associé à un noeud dudit graphe orienté,
associer chaque ensemble d'informations à un noeud dudit graphe orienté comprenant une première partie (GP-UII) commune à la totalité desdits types d'interfaces d'utilisateur différents et une seconde partie (SP-UII1, SP-UII2) affectée à l'un desdits types d'interfaces d'utilisateur différents, dans lequel chacune desdites secondes parties comprend des sous-ensembles d'informations d'interfaces spécifiant un certain nombre de modes secondaires de fonctionnement qu'est capable de réaliser le type d'interface affecté audit noeud,
sélectionner un type d'interface d'utilisateur en accédant aux informations d'interfaces d'au moins l'un desdits noeuds sous la commande des programmes frontaux de présentation (PFE-1, PFE-2) représentant chacun l'un desdits types d'interfaces d'utilisateur différents, et
sélectionner l'un desdits modes secondaires de fonctionnement en commutant entre lesdits sous-ensembles de ladite seconde partie desdites informations d'interfaces auxquelles on accède.

8. Procédé selon la revendication 7, dans lequel les noeuds dudit graphe orienté sont des noeuds ET et/ou des noeuds OU spécifiant la connexion au noeud ou aux noeuds du niveau inférieur suivant du graphe orienté.

9. Procédé selon la revendication 7, comprenant en outre l'étape consistant à transformer lesdites informations d'interfaces d'utilisateur en informations de commande spécifiant les caractéristiques des types d'interfaces d'utilisateur différents.

10. Procédé selon la revendication 9, comprenant en outre l'étape consistant à mettre en oeuvre les sémantiques de fonction du système de programmation d'une façon indépendante du type d'interface d'utilisateur.

11. Procédé selon l'une des revendications 7 à 10, dans lequel ladite première partie (GP-UII) desdites informations d'interfaces d'utilisateur commande ladite transformation desdites informations d'interfaces d'utilisateur en lesdites informations de commande, et dans lequel ladite seconde partie (SP-UII1, SP-UII2) desdites informations d'interfaces d'utilisateur commande le type d'interface d'utilisateur associé par l'intermédiaire de l'un desdits programmes frontaux de présentation (PFE).

12. Procédé selon l'une des revendications 1 à 11, comprenant en outre l'étape consistant à mémoriser des données de session d'utilisateur (USD) sous un format indépendant de l'interface d'utilisateur, dans lequel lesdites données de session d'utilisateur sont organisées en relation avec ledit graphe orienté en ce que les données obtenues à partir d'un utilisateur se rapportent à l'un desdits noeuds dudit graphe orienté en ayant affecté un nom de noeud et la valeur de niveau d'imbrication.
